# EUROPÄISCHE PATENTSCHRIFT

(11) **EP 4 638 213 B1**
(45) Veröffentlichungstag und Bekanntmachung des Hinweises auf die Patenterteilung: **28.10.2026**
(21) Anmeldenummer: 23817394.2
(22) Anmeldetag: 01.12.2023
(51) Int. Cl.: B60T 8/172

(54) **VERFAHREN ZUM APPROXIMIEREN EINES REIBWERTS**
METHOD FOR APPROXIMATING A FRICTION VALUE
PROCÉDÉ D'APPROXIMATION D'UNE VALEUR DE FROTTEMENT

(30) Priorität: 20.12.2022 DE 102022134145
(43) Veröffentlichungstag der Anmeldung: 29.10.2025
(73) Patentinhaber: ZF CV Systems Global GmbH, 3006 Bern (CH)
(72) Erfinder: BIEBER, Benjamin, 30900 Wedemark (DE); BÖTTCHER, Jonas, 30455 Hannover (DE); PLÄHN, Klaus, 30926 Seelze (DE); WULF, Oliver, 31535 Neustadt (DE)
(74) Vertreter: Rabe, Dirk-Heinrich
(86) Internationale Anmeldenummer: PCT/EP2023/083854
(87) Internationale Veröffentlichungsnummer: WO 2024/132453

(56) Entgegenhaltungen:
- EP-A1- 3 943 350
- WO-A1-2020/177873
- US-A- 5 653 517
- US-A1- 2001 029 419

## Beschreibung

Die Erfindung betrifft ein Verfahren zum Approximieren eines Reibwerts zwischen Rädern eines Fahrzeugs und einer Fahrbahn. Ferner betrifft die Erfindung ein Fahrerassistenzsystem, ein Fahrzeug und ein Computerprogrammprodukt.

Die Fähigkeit eines Fahrzeugs seine Geschwindigkeit oder Richtung zu ändern, hängt im Wesentlichen von den Kräften ab, die die Reifen des Fahrzeugs auf eine Fahrbahn übertragen können. Die wichtigste Einflussgröße für die übertragbaren Kräfte ist der Reibwert zwischen der Straße und den Reifen des Fahrzeugs. Dieser Reibwert wird durch eine Bereifung des Fahrzeugs und durch Eigenschaften der Fahrbahn beeinflusst. Insbesondere die Fahrbahneigenschaften können im Laufe einer Fahrt erheblich variieren.

Ein menschlicher Fahrer schätzt die Fahrbahnverhältnisse visuell durch eine Windschutzscheibe des Fahrzeugs hindurch und/oder akustisch durch Abrollgeräusche der Räder des Fahrzeugs auf der Fahrbahn ab. Hierbei nutzt ein menschlicher Fahrer Erfahrungen und Wissen über eine aktuelle Bereifung sowie ein Lenkverhalten des Fahrzeugs und berücksichtigt darüber hinaus aktuelle Witterungsbedingungen. Für die sichere Fahrzeugführung ist der aktuelle Reibwert essenziell, da die Fahrweise mit Hilfe dieser Information angepasst werden kann, indem die beabsichtigte Fahrzeugbewegung gegenüber der tatsächlichen Fahrzeugbewegung verglichen wird. Ein erfahrener Kraftfahrer schätzt so laufend ab, welche Längs- und Querbeschleunigungen für das Fahrzeug gefahrlos möglich sind. Zum korrekten Einschätzen der zur Führung des Fahrzeugs auf die Fahrbahn übertragbaren Kräfte und damit auch der möglichen Bewegungsänderungen des Fahrzeugs ist langjährige Erfahrung unerlässlich. Insbesondere ungeübte Fahrer können den Reibwert zwischen den Rädern des Fahrzeugs und der Fahrbahn falsch einschätzen, wodurch ein erhebliches Unfallrisiko besteht. Auch bei autonomen Fahrzeugen ist eine sichere Beurteilung des Reibwerts für einen sicheren Betrieb des Fahrzeugs unerlässlich.

Sensorbasierte Ansätze zur automatisierten Beurteilung von Fahrbahnverhältnissen sind bekannt. So sind beispielsweise optische Sensoren verfügbar, die eine vor dem Fahrzeug liegende Fahrbahn optisch erfassen und die optisch erfassten Bilddaten auswerten, um Haftverhältnisse zwischen den Reifen des Fahrzeugs und der Fahrbahn abzuschätzen. Diese Sensoren haben jedoch mehrere Nachteile. Zunächst sind die Ergebnisse stark von den Eigenschaften des Sensors beeinflusst und unter Umständen nicht in allen Fahrsituationen einsetzbar. So können beispielsweise Systeme, welche herkömmliche Kameras nutzen, aufgrund schlechter Lichtverhältnisse nur tagsüber eingesetzt werden. Ferner berücksichtigen optische Systeme nur Aspekte der Fahrbahn und vernachlässigen fahrzeugspezifische Aspekte, wie insbesondere Eigenschaften von Reifen des Fahrzeugs.Die EP3943350A1 offenbart eine Vorrichtung zum Bestimmen einer Straßenreibung eines Nutzfahrzeugs. Das Nutzfahrzeug umfasst eine erste Achse und eine zweite Achse, einen Lastverteilungsmechanismus zum Ändern einer Last auf der ersten Achse oder auf der zweiten Achse und einen Schlupfsensor zum Ermitteln eines Schlupfwerts für mindestens ein Rad auf der ersten Achse oder auf der zweiten Achse. Die Vorrichtung zum Bestimmen einer Straßenreibung eines Nutzfahrzeugs umfasst eine Auswertungseinheit, die dazu konfiguriert ist, den Lastverteilungsmechanismus zu steuern, um die Last der ersten Achse oder der zweiten Achse zu ändern; als Reaktion auf die Änderung der Last eine Änderung des Schlupfwerts zu bestimmen; und basierend auf der Änderung des Schlupfwerts die Straßenreibung auszuwerten.

Die Aufgabe der vorliegenden Erfindung besteht darin, ein Verfahren zum Approximieren eines Reibwerts zwischen Rädern eines Fahrzeugs und einer Fahrbahn, ein Fahrerassistenzsystem, ein Fahrzeug und/oder ein Computerprogrammprodukt anzugeben, das vorzugsweise ausreichend genau ist, eine verbesserte Sicherheit ermöglicht und/oder zuverlässig einsetzbar ist.

In einem ersten Aspekt löst die Erfindung die vorgenannte Aufgabe mittels eines Verfahrens gemäß dem unabhängigen Anspruch 1, das die folgenden Schritte aufweist: Durchführen zumindest einer Testbeschleunigung des Fahrzeugs durch Einwirken zumindest auf ein Prüfrad; Ermitteln eines Radschlupfes des Prüfrads für zumindest einen Zeitabschnitt der Testbeschleunigung; Ermitteln einer in dem Zeitabschnitt zum Einwirken auf das Prüfrad bereitgestellten Prüfstellgröße, Ermitteln einer in dem Zeitabschnitt am Prüfrad vorliegenden Prüflastcharakteristik; und Ermitteln eines Referenzreibwerts für die Testbeschleunigung basierend auf der ermittelten Prüflastcharakteristik, der ermittelten Prüfstellgröße und dem ermittelten Radschlupf des Prüfrads. Es soll verstanden werden, dass das Ermitteln des Referenzreibwerts fehlerbehaftet sein kann, sodass der ermittelte Referenzreibwert auch mit einem Fehler (e) von einem realen Reibwert abweichen kann, wie dies grundsätzlich auch beim Messen physikalischer Größen bekannt ist. Der Erfindung liegt die Erkenntnis zugrunde, dass der Radschlupf von Rädern des Fahrzeugs zum Ermitteln eines Reibwerts zwischen den Rädern des Fahrzeugs und der Fahrbahn verwendet werden kann. Ferner basiert die Erfindung auf der Erkenntnis, dass nicht nur ein auf das Prüfrad aufgebrachtes Wirkmoment, das zum Einwirken auf das Prüfrad vorgesehen ist, sondern auch eine Belastung des Prüfrads von entscheidender Bedeutung ist. Diese Belastung des Prüfrads wird durch die Prüflastcharakteristik berücksichtigt. Aus der ermittelten Prüflastcharakteristik, der ermittelten Prüfstellgröße und dem ermittelten Radschlupf des Prüfrads kann der Referenzreibwert so einfach und/oder exakt ermittelt werden. Hierfür sind vorteilhaft auch keine Umweltsensoren, wie Kameras oder Radarsensoren, notwendig. Das Verfahren ist besonders kostengünstig und zuverlässig realisierbar.

Der Reibwert bestimmt die maximal zwischen Fahrzeug und Fahrbahn übertragbaren Kräfte. Vorzugsweise ist das Einwirken auf das Prüfrad ein Bereitstellen eines Wirkmoments auf das Prüfrad. Das Wirkmoment wird zur Änderung einer Fahrzeugbewegung von einem Aktuator des Fahrzeugs bereitgestellt und ist kein durch das Abrollen des Fahrzeugs auf der Fahrbahn resultierendes Moment. Vorzugsweise ist das Wirkmoment ein Bremsmoment für das Prüfrad. Die Prüfstellgröße ist eine an einem Fahrzeugaktuator bereitgestellte Stellgröße, wobei der Fahrzeugaktuator zum Einwirken auf das Prüfrad vorgesehen ist. Erfindungsgemäß ist die Testbeschleunigung eine Verzögerung des des Prüfrads, und die Stellgröße ist ein Bremsdruck eines dem Prüfrad zugeordneten Bremszylinders.

Erfindungsgemäß umfasst das Ermitteln eines Radschlupfes für zumindest einen Zeitabschnitt der Testbeschleunigung: Ermitteln einer Prüfdrehzahl des Prüfrads; Ermitteln einer Vergleichsdrehzahl eines Vergleichsrads; und Ermitteln des Radschlupfes basierend auf der ermittelten Prüfdrehzahl und der ermittelten Vergleichsdrehzahl, wobei das Vergleichsrad ein im Zeitabschnitt freirollendes Rad ist. Auf das Prüfrad wird also im Verlauf der Testbeschleunigung eingewirkt, während das Vergleichsrad freirollend ist. Ein freirollendes Rad wird nicht von einem Fahrzeugaktuator mit einem Wirkmoment beaufschlagt. Es soll jedoch verstanden werden, dass auch an einem freirollenden Rad durch Wechselwirkung mit der Fahrbahn und/oder durch Reibungseffekte Drehmomente wirken können. Der Unterschied zwischen dem Vergleichsrad und dem Prüfrad besteht in der bewussten Einwirkung, die nur für das Prüfrad vorgesehen ist. So wird das Prüfrad selektiv mittels einer zugeordneten

Bremse gebremst, während dem Vergleichsrad zugeordnete Bremsen offen sind. Das freirollende Vergleichsrad hat näherungsweise keinen Schlupf, sodass eine Abrollgeschwindigkeit des Rades im Wesentlichen einer Geschwindigkeit des Fahrzeugs entspricht. Am Prüfrad stellt sich hingegen aufgrund der Einwirkung ein Schlupf ein. Dieser Schlupf korrespondiert mit der Prüfdrehzahl des Prüfrads. Die Prüfdrehzahl und die Vergleichsdrehzahl des Vergleichsrads werden so zum Ermitteln des Radschlupfes verwendet.

Vorzugsweise sind das Prüfrad und das Vergleichsrad voneinander verschiedenen Achsen des Fahrzeugs zugeordnet. So ist es besonders einfach möglich, auf das Prüfrad einzuwirken während zeitgleich das Vergleichsrad freirollend ist. Ferner kann als Vergleichsrad ein Rad einer Achse ausgewählt werden, die einen vergleichsweise geringen oder keinen Anteil am Bereitstellen der Testbeschleunigung hat. Es kann aber auch vorgesehen sein, dass das Prüfrad und das Vergleichsrad Räder der gleichen Achse des Fahrzeugs sind. Das Vergleichsrad ist bevorzugt ein Rad einer liftbaren Zusatzachse des Fahrzeugs, die in dem Zeitabschnitt abgesenkt ist. Liftbare Zusatzachsen des Fahrzeugs können bei Bedarf angehoben werden, um so einen Verschleiß zu reduzieren, einen Kraftstoffverbrauch des Fahrzeugs zu senken und/oder Mautgebühren zu sparen. Zum Transport großer Lasten kann die liftbare Zusatzachse hingegen abgesenkt werden, sodass die Last auf eine zusätzliche Achse des Fahrzeugs verteilt wird. Ferner kann das Absenken der Liftachse vorteilhaft sein, um Achslastgrenzen beim Befahren von Brücken zu unterschreiten. Die liftbare Zusatzachse übernimmt im Vergleich zu anderen Achsen des Fahrzeugs häufig einen geringeren Beitrag bei Änderungen der Längs- oder Querdynamik des Fahrzeugs, sodass ein Einfluss eines an der liftbaren Zusatzachse angeordneten Vergleichsrads auf die Fahrdynamik des Fahrzeugs gering ist. In einer bevorzugten Ausgestaltung des Verfahren ist das Prüfrad ein Rad einer Hinterachse des Fahrzeugs, insbesondere einer Zusatzachse des Fahrzeugs. Es soll verstanden werden, dass das Fahrzeug auch mehrere Hinterachsen aufweisen kann. Im Allgemeinen ist eine Vorderachse des Fahrzeugs dessen gelenkte Achse. Gelenkte Achsen sind besonders kritisch für die Fahrstabilität des Fahrzeugs. Vorzugsweise ist das Prüfrad jedoch ein Rad, dessen Einfluss auf das Gierverhalten des Fahrzeugs gering ist. In der Regel sind dies Räder der Hinterachse des Fahrzeugs. Insbesondere Zusatzachsen, die liftbar sein können, sind in der Regel geringer belastet, sodass sich deren Räder besonders als Prüfräder eignen. Bei niedriger belasteten Achsen stellt sich bei gleicher Verzögerung ein größerer Schlupf ein als bei hochbelasteten Achsen, sodass sich Räder geringer belasteter Achsen besonders als Prüfräder eignen.

Vorzugsweise weist das Verfahren ferner auf: Ermitteln eins Betriebsradschlupfes des Prüfrads in einer Betriebsfahrsituation; Ermitteln einer gegenwärtigen Lastcharakteristik des Fahrzeugs in der Betriebsfahrsituation; Ermitteln einer in der Betriebsfahrsituation zum Einwirken auf das Prüfrad bereitgestellten Stellgröße; Ermitteln eines gegenwärtigen Reibwerts der Betriebsfahrsituation durch Auswählen eines korrespondierenden Referenzreibwerts, wobei der Referenzreibwert zum gegenwärtigen Reibwert korrespondiert, falls die ermittelte Lastcharakteristik innerhalb einer Lasttoleranz um die Prüflastcharakteristik liegt, der Betriebsradschlupf innerhalb einer Schlupftoleranz um den Radschlupf liegt und die Stellgröße innerhalb einer Stellgrößentoleranz um die Prüfstellgröße liegt. Eine Betriebsfahrsituation ist eine im normalen Betrieb des Fahrzeugs auftretende Fahrsituation, beispielsweise eine Bremsung eines auf eine Ampel zufahrenden Fahrzeugs. Ein in der Betriebsfahrsituation vorliegender gegenwärtiger Reibwert kann mittels der vorbeschriebenen Weiterbildung des Verfahrens besonders einfach ermittelt werden. So können die Lastcharakteristik, der Betriebsradschlupf und die Stellgröße, die in der Regel im Normalfahrbetrieb einfach verfügbar sind, genutzt werden, um den Reibwert zuverlässig zu ermitteln. Beispielsweise können der Betriebsradschlupf und die Stellgröße von einem Bremssystem des Fahrzeugs kontinuierlich ermittelt werden und verfügbar sein. Die Auswahl ist durch Verwendung der Parameterkombination aus Stellgröße, Betriebsradschlupf und Lastcharakteristik einfach möglich. Das Ermitteln des gegenwärtigen Reibwerts erfolgt vorzugsweise basierend auf im Rahmen der Testbremsung gelernter Referenzreibwerte. Es soll verstanden werden, dass eine Vielzahl von Testbremsungen zum Approximieren einer Vielzahl von Referenzreibwerten durchgeführt werden kann, sodass eine breite Basis zur Auswahl des gegenwärtigen Reibwerts zur Verfügung steht.

Gemäß einer bevorzugten Weiterbildung umfasst das Verfahren ferner ein Durchführen einer Folgeoperation unter Verwendung des gegenwärtigen Reibwerts, wobei die Folgeoperation ein Bereitstellen eines Warnsignals, ein Versetzen eines Stabilitätsregelsystems in einen präventiven Anregelmodus; ein Neuermitteln einer Trajektorie des Fahrzeugs, ein Bereitstellen einer Geschwindigkeitsreduktionsaufforderung, ein Ermitteln eines Bewegungsfreiheitsgradgrenzwerts, ein Limitieren eines Bewegungsfreiheitsgrads des Fahrzeugs und/oder ein Validieren eines Reibwertsensors ist oder umfasst. Durch eine Geschwindigkeitsreduktionsaufforderung wird der Fahrer des Fahrzeugs dazu aufgefordert, die Geschwindigkeit des Fahrzeugs zu reduzieren. Dies kann durch entsprechende Signale an eine autonome Einheit oder beispielsweise durch eine Anzeige auf einem Display erfolgen. Vorzugsweise wird die Folgeoperation nur dann durchgeführt wird, wenn der gegenwärtige Reibwert einen Reibwertgrenzwert unterschreitet. So kann beispielsweise ein Warnsignal nur dann ausgegeben werden, wenn der Reibwert den Reibwertgrenzwert unterschreitet. Dies kann beispielsweise der Fall sein, wenn das Fahrzeug bei winterlichen Straßenverhältnissen auf einer Fahrbahn fährt. Das Warnsignal ist vorzugsweise ein optisches, akustisches und/oder haptisches Warnsignal. Es kann aber auch vorgesehen sein, dass das Warnsignal ein elektrisches Warnsignal ist, das an einer Steuereinheit des Fahrzeugs bereitgestellt wird. Die Trajektorie umfasst zumindest einen geplanten Pfad, der von dem Fahrzeug zum Erfüllen einer Fahraufgabe zu befahren ist. Ferner umfasst die Trajektorie eine fahrdynamische Vorgabe. Diese fahrdynamische Vorgabe ist oder umfasst vorzugsweise eine zum Befahren des Pfads vorgegebene Geschwindigkeit oder einen zum Befahren des Pfads vorgegebenen Geschwindigkeitsverlauf. Die Trajektorie wird von einer voll- oder teilautonomen Einheit, wie einer automatischen Distanzregelung oder einer autonomen Steuereinheit, die auch als virtueller Fahrer bezeichnet wird, ermittelt. Das Neuermitteln der geplanten Trajektorie kann ein vollständiges Neuermitteln der geplanten Trajektorie, ein teilweises Neuermitteln der geplanten Trajektorie und/oder ein Aktualisieren der geplanten Trajektorie sein. Ein teilweises Neuermitteln liegt beispielsweise dann vor, wenn eine von der geplanten Trajektorie umfasste Bahnkurve bzw. ein von der Trajektorie umfasster Pfad beibehalten wird und zugleich ein zum Befahren der Bahnkurve korrespondierendes Geschwindigkeitsprofil, das von der geplanten Trajektorie umfasst ist, neu ermittelt wird. Beim teilweisen Neuermitteln werden vorzugsweise alle der Trajektorienplanung zugrundeliegenden Informationen und/oder Daten erneut ermittelt. Beim Aktualisieren werden vorzugsweise nur einige der Trajektorienplanung zugrundeliegenden Informationen und/oder Daten erneut ermittelt. Der ermittelte Reibwert und/oder der Ermittelte Fahrdynamikgrenzwert wird vorzugsweise in der Trajektorie berücksichtigt, wodurch eine Sicherheit beim Nutzen des Fahrzeugs erhöht werden kann. Ein Einhalten des Fahrdynamikgrenzwerts gewährleistet im Regelbetrieb eine sichere und stabile Fahrt des Fahrzeugs. Vorzugsweise ist oder umfasst der Fahrdynamikgrenzwert eine maximal zulässige Fahrzeuggeschwindigkeit, eine maximal zulässige Querbeschleunigung, eine maximal zulässige Fahrzeugbeschleunigung, eine maximal zulässige Fahrzeugverzögerung, einen maximal zulässigen Lenkwinkelgradient, eine maximal zulässige Lenkfrequenz oder einen minimal zulässigen Kurvenradius des Fahrzeugs.

Erfindungsgemäß ist die Testbeschleunigung eine Testbremsung des Fahrzeugs, die Prüfstellgröße ein Bremsdruck, der an einem dem Prüfrad zugeordneten Bremsaktuator bereitgestellt wird, wobei das Vergleichsrad von der Testbremsung ausgenommen ist, sodass in dem Zeitabschnitt kein Bremsdruck an einem dem Vergleichsrad zugeordneten Bremsaktuator bereitgestellt wird. Eine Bremsung ist eine negative Beschleunigung des Fahrzeugs, die zu einer Reduktion der Geschwindigkeit des Fahrzeugs führt. Der Bremsaktuator ist bei herkömmlichen Fahrzeugbremsen ein Bremszylinder, der mittels eines unter Druck stehenden Fluids betätigt wird. Beim Betätigen spannt der Bremszylinder die Bremsen zu. Der dem Prüfrad zugeordnete Bremsaktuator ist zum Bereitstellen eins Bremsmoments am Prüfrad vorgesehen. Der Bremsdruck ist die Stellgröße, die zum Bereitstellen des Bremsmoments führt. Das Vergleichsrad ist von der Testbremsung ausgenommen und freirollend. Im Zeitabschnitt wird also kein Bremsdruck an dem Bremsaktuator des Vergleichsrads bereitgestellt.

Vorzugsweise wird in dem Zeitabschnitt ausschließlich das Vergleichsrad von der Testbremsung ausgenommen. Eine durch das Ausnehmen des Vergleichsrads von der Testbremsung bedingte Reduktion der Bremsleistung minimiert werden. Ferner kann eine besonders gute Korrelation zwischen Referenzreibwert und gegenwärtigem Reibwert erreicht werden.

Erfindungsgemäß ist die Testbremsung eine Normalbremsung, die in einem Normalfahrbetrieb des Fahrzeugs zum Erfüllen einer Fahraufgabe durchgeführt wird. So kann die Testbremsung auch in einem regulären Fahrbetrieb des Fahrzeugs durchgeführt werden. Die Testbremsung muss also nicht auf einem abgesperrten Testgelände erfolgen. Die Besonderheit der Testbremsung liegt hier darin, dass im Gegensatz zu einer regulären Bremsung des Fahrzeugs, bei der in der Regel sämtliche Bremsaktuatoren zum Bremsen des Fahrzeugs genutzt werden, das Vergleichsrad freirollend ist bzw. der Bremsaktuator des Vergleichsrads nicht aktuiert wird. Die Normalbremsung kann Beispielsweise eine Bremsung eines auf eine rote Ampel zurollenden Fahrzeugs sein.

Vorzugsweise ist die Testbremsung eine Bremsung, bei der das Prüfrad durch eine Bremskraftumverteilung stärker gebremst wird, als weitere gebremste Räder des Fahrzeugs. Die insgesamt für das Fahrzeug angeforderte Bremskraft kann dabei unverändert sein. So kann bei im Vergleich zu einer regulären Bremsung im Wesentlichen identischer Verzögerungsleistung des Fahrzeugs der Reibwert ermittelt werden. Durch die Bremskraftverteilung wird die von bzw. an den einzelnen Rädern verrichtete Bremsleistung, die mit der Bremskraft von den Rädern zugeordneten Bremsaktuatoren korrespondiert, so angepasst, dass an dem Prüfrad auch bei geringen absoluten Verzögerungen des Fahrzeugs ein Schlupf entsteht, der sich zum Ermitteln des Reibwerts eignet. Aufgrund der Bremskraftumverteilung kann das Verfahren im Wesentlichen unbemerkt von einem Fahrer des Fahrzeugs durchgeführt werden. Das Verfahren eignet sich so besonders für Testbremsungen, die Normalbremsungen sind.

In einer Variante des Verfahrens, wird in dem Zeitabschnitt ausschließlich das zumindest eine Prüfrad gebremst. In dieser Variante kann ein Einfluss der Testbremsung auf das Fahrzeug minimiert werden. So kann beispielsweise bei einer Geradeausfahrt des Fahrzeugs mit im Wesentlichen konstanter Geschwindigkeit das Prüfrad moderat gebremst und ein Referenzreibwert ermittelt werden.

Vorzugsweise ist die Testbremsung eine zum Ermitteln des Referenzreibwerts initiierte Anforderungsbremsung, die ohne zugeordneten Verzögerungsbedarf des Fahrzeugs initiiert wird. Besonders bevorzugt wird die Anforderungsbremsung bei einer Geradeausfahrt des Fahrzeugs initiiert. Der Referenzreibwert ist so in vergleichsweise unkritischen Fahrsituationen durchführbar. Die Anforderungsbremsung kann englisch auch als Brake Request on Demand bezeichnet werden und wird vorzugsweise ausschließlich zum Zwecke des Ermittelns des Referenzreibwerts initiiert. Es kann aber auch vorgesehen werden, dass während der Anforderungsbremsung weitere Referenzgrößen bestimmt werden. Die Anforderungsbremsung kann vorzugsweise in eine reguläre Fahraufgabe des Fahrzeugs integriert werden, sodass der Referenzreibwert beispielsweise auch dann ermittelt werden kann, wenn das Fahrzeug keine zum Ermitteln des Referenzreibwerts geeigneten Normalbremsungen durchführt. So ist mittels einer Anforderungsbremsung beispielsweise auch dann ein Referenzreibwert ermittelbar, wenn das Fahrzeug auf mit im Wesentlichen konstanter Geschwindigkeit auf einer geraden Autobahnstrecke fährt, ohne Normalbremsungen durchzuführen. Ohne Verzögerungsbedarf heißt vorzugsweise, dass zum Erfüllen einer Fahraufgabe des Fahrzeugs zum Zeitpunkt der Anforderungsbremsung keine Verzögerung des Fahrzeugs notwendig ist. Vorzugsweise wird das Fahrzeug beim Durchführen der Anforderungsbremsung maximal um 0,5 m/s2 oder weniger, besonders bevorzugt um 0,2 m/s² oder weniger verzögert.

Der Zeitabschnitt hat vorzugsweise einen Wert von größer 0 s bis 5s, besonders bevorzugt von 1s bis 2s. Mittels eines in diesem Wertebereich liegenden Zeitabschnitts kann einerseits eine ausreichende Genauigkeit beim Ermitteln des Referenzreibwerts und andererseits eine möglichst geringfügige Beeinträchtigung eines Fahrzeugverhaltens des Fahrzeugs erreicht werden.

Gemäß einer bevorzugten Ausführungsform des Verfahrens ist die Testbremsung eine moderate Bremsung in einem Bereich von größer 0 m/s² bis 2 m/s², insbesondere 1 m/s² bis 2 m/s². In dem bevorzugten Verzögerungsbereich ist ein dynamisches Fahrzeugverhalten des Fahrzeugs stabil und eine Notsituation liegt in der Regel nicht vor, sodass die Testbremsung im bevorzugten Bereich besonders sicher durchgeführt werden kann. Wenn das Vergleichsrad von der Testbremsung ausgenommen ist, stellt dieses keine Verzögerungsleistung bereit bzw. bewirkt keine Verzögerung. Das Verfahren umfasst daher vorzugsweise eine Bremskraftumverteilung, wobei weitere gebremste Räder des Fahrzeugs die fehlende Verzögerung des Vergleichsrads kompensieren. Die übrigen Räder werden also so gebremst, dass die Verzögerung des Fahrzeugs für die Testbremsung im Wesentlichen identisch zu einer Verzögerung ist, die ohne Ausnehmen des Vergleichsrads von der Bremsung erfolgt.

In einer nicht beanspruchten Weiterbildung ist Testbeschleunigung eine positive Beschleunigung des Fahrzeugs und die Prüfstellgröße ein an dem Prüfrad bereitgestelltes Antriebsmoment, wobei an dem Vergleichsrad im Zeitabschnitt kein Antriebsmoment bereitgestellt wird. Eine positive Beschleunigung führt zu einer Erhöhung der Geschwindigkeit des Fahrzeugs. Das Vergleichsrad ist erneut freirollend, kann aber dennoch mit einem Moment, das kein Antriebsmoment ist, beaufschlagt sein (bspw. durch Reibung auf der Fahrbahn). Vorzugsweise ist das Vergleichsrad für die Testbeschleunigung ein Rad einer nicht angetriebenen Achse. Durch eine positive Testbeschleunigung kann das Verfahren besonders sicher durchgeführt werden, da Beschleunigungssituationen in der Regel weniger kritisch sind als Bremssituationen. Vorzugsweise kann das Verfahren sowohl Testbremsungen als auch positive Testbeschleunigungen umfassen. Hierdurch ist eine besonders große Zahl von Fahrsituationen zum Ermitteln eines oder mehrerer Referenzreibwerte verwendbar.

Vorzugsweise ist oder umfasst die Prüflastcharakteristik eine Achslast auf einer Prüfachse des Fahrzeugs, an der das Prüfrad angeordnet ist, eine Radlast des Prüfrads, eine Massenverteilung des Fahrzeugs, eine Gesamtmasse des Fahrzeugs, eine Teilmasse eines Fahrzeugteils, an dem das Prüfrad angeordnet ist, eine Schwerpunktlage des Fahrzeugs und/oder eine Schwerpunktlage eines Fahrzeugteils. Eine Achslast der Prüfachse korreliert besonders gut zum am Prüfrad vorliegenden Reibwert und eignet sich daher besonders als Prüflastcharakteristik. Es soll jedoch verstanden werden, dass die Prüflastcharakteristik auch eine andere Lastcharakteristik sein kann. So kann beispielsweise auch aus einer relativen Massenverteilung des Fahrzeugs und einer Gesamtmasse des Fahrzeugs auf eine Achslast der Prüfachse geschlossen werden. Ferner muss die Achslast der Prüfachse auch nicht ermittelt werden, da auch andere Lastcharakteristika zum Referenzreibwert korrelieren.

In einem zweiten Aspekt löst die Erfindung die eingangs genannte Aufgabe mit einem Fahrerassistenzsystem, das dazu ausgebildet ist, das Verfahren gemäß dem ersten Aspekt der Erfindung auszuführen. Erfindungsgemäß umfasst das Fahrerassistenzsystem eine Steuereinheit und eine Schnittstelle, die mit einem Fahrzeugnetzwerk des Fahrzeugs verbunden ist.

Die Schnittstelle ist vorzugsweise zum Empfangen von Fahrzeugsignalen ausgebildet, die die Vergleichsdrehzahl, die Prüfdrehzahl, die Prüflastcharakteristik, die Lastcharakteristik, den Radschlupf, den Betriebsradschlupf, die Stellgröße und/oder die Prüfstellgröße repräsentieren. Es soll verstanden werden, dass einer oder mehrere der Ermittlungsschritte des Verfahrens von dem Fahrerassistenzsystem basierend auf solchen Fahrzeugsignalen erfolgen kann. Das Fahrerassistenzsystem muss also beispielsweise die Lastcharakteristik nicht unmittelbar selbst ermitteln, sondern kann diese beispielsweise auch basierend auf Lastsignalen ermitteln, die von einem Luftfedersystem des Fahrzeugs auf dem Fahrzeugnetzwerk bereitgestellt werden.

In einem dritten Aspekt löst die Erfindung die eingangs genannte Aufgabe durch ein Fahrzeug mit zumindest zwei Achsen, einem Bremssystem, einer Lenkung, einem Antriebsmotor und einem Fahrerassistenzsystem gemäß dem zweiten Aspekt der Erfindung.

Gemäß einem vierten Aspekt der Erfindung wird die eingangs genannte Aufgabe mittels eines Computerprogrammprodukts gelöst, das Programmcode-Mittel aufweist, die auf einem computerlesbaren Datenträger gespeichert sind, um das Verfahren gemäß dem ersten Aspekt der Erfindung auszuführen, wenn das Computerprogrammprodukt auf einer Recheneinheit, insbesondere der Steuereinheit des Fahrerassistenzsystems gemäß dem zweiten Aspekt der Erfindung, ausgeführt wird.

Es soll verstanden werden, dass das Fahrerassistenzsystem gemäß dem zweiten Aspekt der Erfindung, das Fahrzeug gemäß dem dritten Aspekt der Erfindung und das Computerprogrammprodukt gemäß dem vierten Aspekt der Erfindung gleiche und ähnliche Unteraspekte aufweist, wie sie insbesondere in den abhängigen Ansprüchen zum Verfahren gemäß dem ersten Aspekt der Erfindung niedergelegt sind.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne dass dadurch der durch die Patentansprüche definierte Schutzbereich verlassen wird.

Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine Draufsicht auf ein schematisch dargestelltes Fahrzeug;
- Fig. 2a: eine als Normalbremsung ausgeführte Testbremsung des Fahrzeugs;
- Fig. 2b: eine als Anforderungsbremsung ausgeführte Testbremsung des Fahrzeugs;
- Fig. 2c: eine positive Testbeschleunigung des Fahrzeugs; und in
- Fig. 3: ein schematisches Ablaufdiagramm eines Verfahrens zum Approximieren eines Reibwerts.

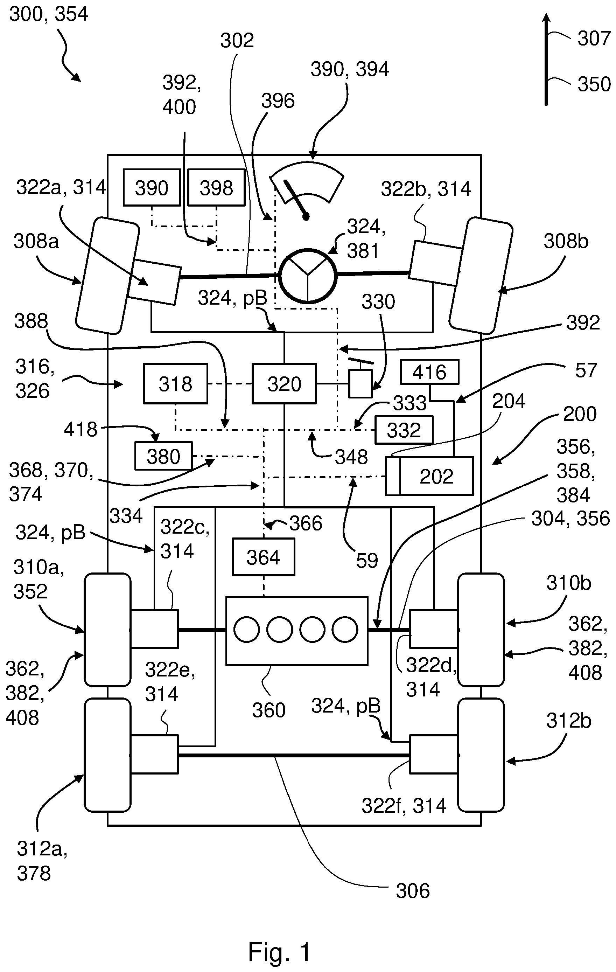

Fig. 1 zeigt ein Fahrzeug 300 mit einer Vorderachse 302, einer Hinterachse 304 und einer liftbaren Zusatzachse 306, die in Fahrtrichtung 307 hinter der Hinterachse 304 angeordnet ist. Die liftbare Zusatzachse 306 (kurz Liftachse 306) kann angehoben bzw. geliftet werden, sodass die Masse des Fahrzeugs 300 bzw. eine aus der Last resultierende Gewichtskraft sich nur auf Vorderräder 308 der Vorderachse 302 und Hinterräder 310 der Hinterachse 304 verteilt. Bei abgesenkter Liftachse 306 wird die Gewichtskraft des Fahrzeugs 300 zusätzlich auf Zusatzräder 312 der Liftachse 306 verteilt.

Das Fahrzeug 300 weist mehrere Fahrzeugaktuatoren 314 auf, die dazu ausgebildet sind, das Fahrzeug 300 in dessen Längsdynamik und Querdynamik zu beeinflussen. Hierzu beeinflussen die Fahrzeugaktuatoren 314 mehrere Bewegungsfreiheitsgrade des Fahrzeugs 300. Zum Bremsen des Fahrzeugs 300 ist ein Bremssystem 316 vorgesehen, das eine Bremssteuereinheit 318, einen Bremsmodulator 320 und mehrere Bremsaktuatoren 322 aufweist. Die Bremsaktuatoren 322 sind den Rädern 308, 310, 312 des Fahrzeugs 300 zugeordnet und dazu ausgebildet, an den Rädern 308, 310, 312 ein Bremsmoment 313 bereitzustellen. So stellt beispielsweise ein Bremsaktuator 322c ein Bremsmoment 313 an einem linken Hinterrad 310a des Fahrzeugs 300 bereit. Das von den Bremsaktuatoren 322 an dem jeweiligen Rad 308, 310, 312 ausgesteuerte Bremsmoment 313 korrespondiert zu einer Stellgröße 324, die an dem jeweiligen Bremsaktuator 322 bereitgestellt wird. In diesem Fall ist das Bremssystem 316 ein pneumatisches Bremssystem 316. Die an den Bremsaktuatoren 322 bereitgestellte Stellgröße 324 ist daher ein Bremsdruck pB. Dieser Bremsdruck pB wird von dem Bremsmodulator 320 an den Bremsaktuatoren 322 bereitgestellt. In der vereinfachten Darstellung gemäß Fig. 1 stellt der Bremsmodulator 320 den Bremsdruck pB an mehreren Bremsaktuatoren 322 bereit. Es soll jedoch verstanden werden, dass die an den Bremsaktuatoren 322 bereitgestellten Bremsdrücke pB sich voneinander unterscheiden können. So kann beispielsweise ein Bremsdruck pB an Bremsaktuatoren 322a, 322b der Vorderräder 308a, 308 von einem Bremsdruck pB an Bremsaktuatoren 322c, 322d, die den Hinterrädern 310a, 310b zugeordnet sind, verschieden sein. Ferner können auch die Bremsdrücke pB an Bremsaktuatoren 322 von Rädern derselben Achse 302, 304, 306 voneinander verschieden sein.

Im vorliegenden Ausführungsbeispiel ist das Bremssystem 316 ein elektronisches Bremssystem 326. Die Bremssteuereinheit 318 steuert den Bremsmodulator 320 basierend auf elektronischen Bremssignalen 328 an. Diese Bremssignale 328 empfängt die Bremssteuereinheit 318 von einem elektronischen Fußbremspedal 330 des Fahrzeugs 300. Ferner ist das Fahrzeug 300 hier ein teilautonomes Fahrzeug 300, das teilweise von einer autonomen Einheit 332 gesteuert wird. Die autonome Einheit 332 ist über ein Fahrzeugnetzwerk 334, das hier ein CAN-Bussystem ist, mit der Bremssteuereinheit 318 verbunden und dazu ausgebildet, die Bremssignale 328 auf dem Fahrzeugnetzwerk 334 bzw. für die Bremssteuereinheit 318 bereitzustellen. Die autonome Einheit 332 ist hier dazu ausgebildet, eine Trajektorie 333 für das Fahrzeug 300 zu planen, die sowohl einen geplanten Pfad 335 als auch ein zum Pfad 335 korrespondierendes Geschwindigkeitsprofil 337 umfasst. So kann die autonome Einheit 332 beispielsweise zum Bereitstellen einer Abstands- und Spurhaltefunktion eingerichtet sein, wobei die autonome Einheit 332 dann zum Bremsen des Fahrzeugs 300 Bremssignale 328 bereitstellt, wenn ein Abstand zu einem vorausfahrenden Fahrzeug (in den Figuren nicht gezeigt) vergrößert werden soll. Beim Steuern des Fahrzeugs 300 haben von dem elektronischen Fußbremspedal 330 bereitgestellten Bremssignale 328 jedoch vorzugsweise Vorrang gegenüber Bremssignalen 328, die von der autonomen Einheit 332 bereitgestellt werden.

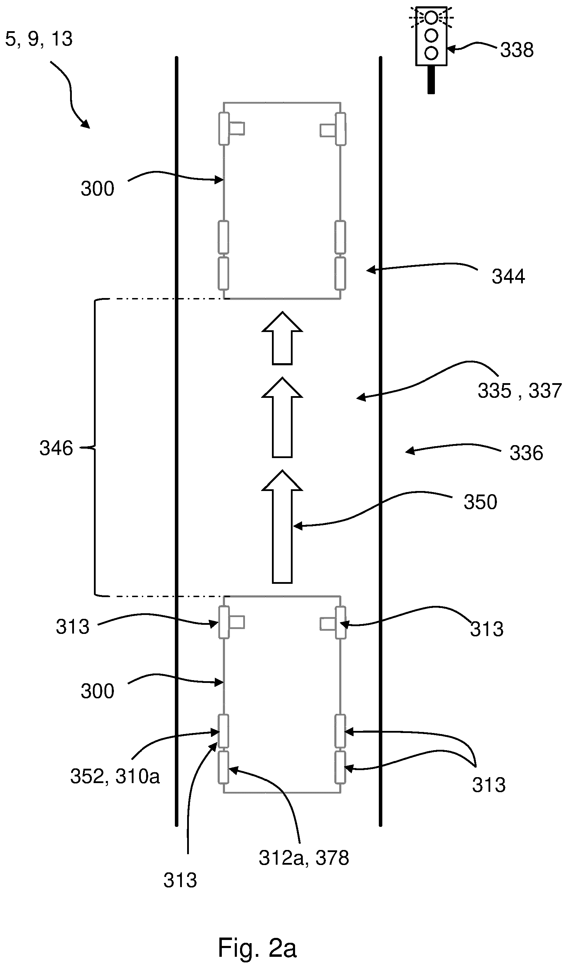

Infolge des Bereitstellens des Bremsdrucks pB wirken die Bremsaktuatoren 322 auf die Räder 308, 310, 312 ein. Eine hierdurch bewirkte Bremsung 336 des Fahrzeugs 300 ist in Fig. 1 anhand von Pfeilen illustriert, deren Länge sich in Fahrtrichtung 307 reduziert. In Fig. 2a ist ein Fahrzeug 300 illustriert das sich in Fahrrichtung 307 auf eine rote Ampel 338 zubewegt. Auch in Figur 2a ist die Bremsung 336 anhand von Pfeilen verdeutlicht, deren Länge sich in Fahrtrichtung 307 reduziert. Die in Fig. 2a dargestellte Bremsung 336 ist eine Normalbremsung 13, die notwendig ist um eine Fahraufgabe des Fahrzeugs 300 zu erfüllen, die im gezeigten Ausführungsbeispiel ein Anhalten des Fahrzeugs 300 vor der roten Ampel 338 ist. Eine bei der Bremsung 336 des Fahrzeugs 300 erreichte negative Beschleunigung des Fahrzeugs 300 ist nicht ausschließlich von dem an den Bremsaktuatoren 322 bereitgestellten Bremsdruck pB, sondern auch von einem gegenwärtigen Reibwert 7 zwischen den Rädern 308, 310, 312 des Fahrzeugs 300 und einer vom Fahrzeug 300 befahrenen Fahrbahn 344 beeinflusst. So kann ein Bremsweg 346 des Fahrzeugs 300 bei identischem Bremsdruck pB an den Bremsaktuatoren 322 der Räder 308, 310, 312 für verschiedene Reibwerte 7 verschieden sein. Beispielsweise kann der Bremsweg 346 gegenüber einer Normalsituation bei trockener Fahrbahn 344 erhöht sein, wenn die Fahrbahn 344 nass ist. Zum sicheren Steuern des Fahrzeugs 300 ist eine Kenntnis des Reibwerts 7 daher von Vorteil. Vorzugsweise ist die autonome Einheit 332 dazu ausgebildet, die Bremssignale 328 unter Verwendung des gegenwärtigen Reibwerts 7 zu ermitteln. So kann die autonome Einheit 332 das Fahrzeug 300 situationsadäquat bremsen und ein Unfallrisiko wird gesenkt.

Das Fahrzeug 300 weist hier ferner ein Fahrerassistenzsystem 200 auf, das im gezeigten Ausführungsbeispiel unter anderem dazu ausgebildet ist, den gegenwärtigen Reibwert 7 zu ermitteln. Es soll jedoch verstanden werden, dass ein solches Ermitteln 39 des gegenwärtigen Reibwerts 7 kein wesentliches Merkmal der vorliegenden Erfindung ist. Das Fahrerassistenzsystem 200 umfasst eine Steuereinheit 202 und eine Schnittstelle 204, die mit dem Fahrzeugnetzwerk 334 verbunden ist. Mittels der Schnittstelle 204 kann das Fahrerassistenzsystem 200 auf dem Fahrzeugnetzwerk 334 bereitgestellte Signale, wie beispielsweise die Bremssignale 328 empfangen. Ferner empfängt das Fahrerassistenzsystem 200 von der Bremssteuereinheit 318 auf dem Fahrzeugnetzwerk 334 bereitgestellte Stellgrößensignale 348, die den an den Bremsaktuatoren 322 bereitgestellten Bremsdruck Pb repräsentieren.

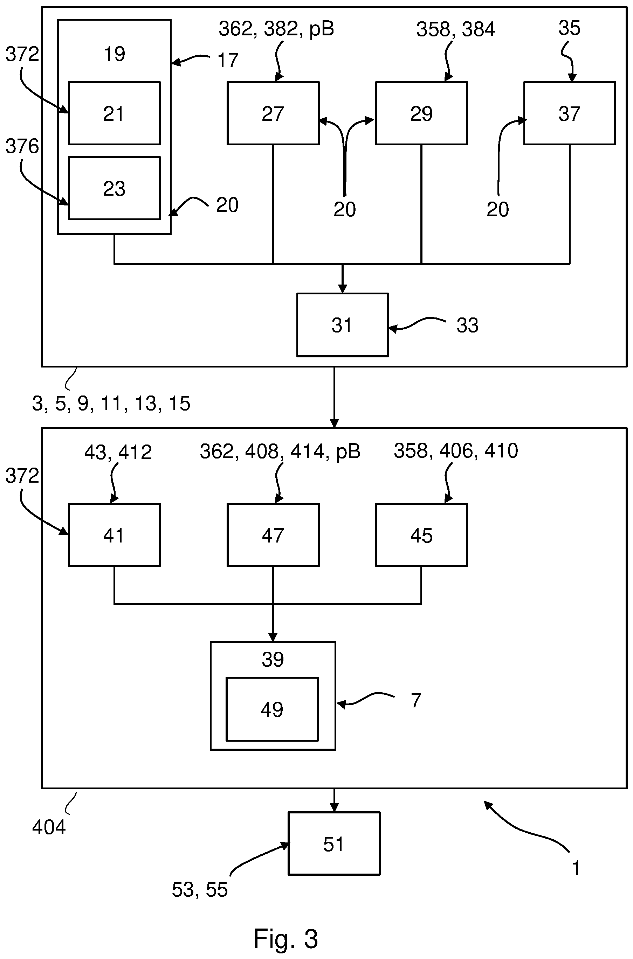

Das Fahrerassistenzsystem 200 ist dazu ausgebildet, das nachstehend unter Bezug auf Fig. 3 erläuterte Verfahren 1 zum Approximieren eines Reibwerts 7, 33 zwischen Rädern 308, 310, 312 des Fahrzeugs 300 und der Fahrbahn 344 auszuführen.

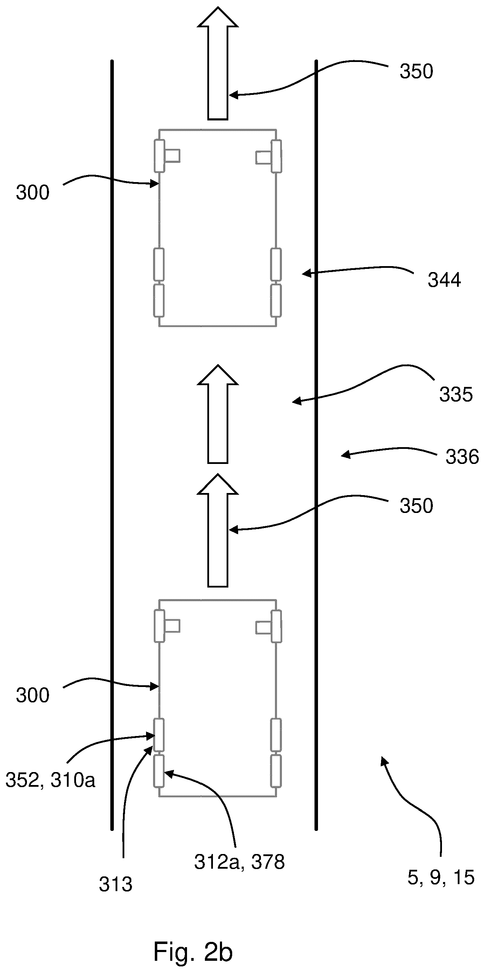

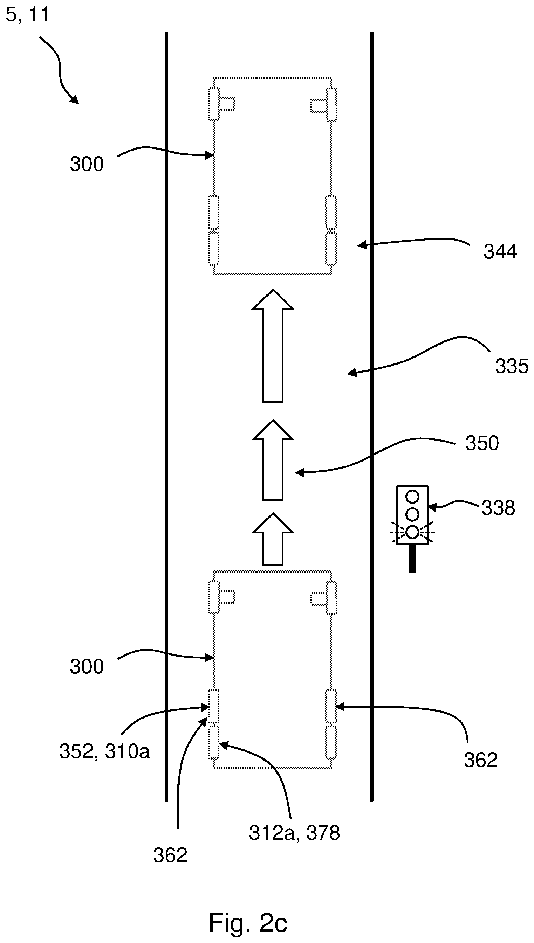

In einem ersten Schritt des Verfahrens 1 erfolgt ein Durchführen 3 einer Testbeschleunigung 5 des Fahrzeugs 300. Die Testbeschleunigung 5 des Fahrzeugs 300 kann eine Testbremsung 9 oder eine positive Testbeschleunigung 11 des Fahrzeugs 300 sein. Ein Beispiel einer Testbremsung 9 ist die in Fig. 2a dargestellte Normalbremsung 13. Ein weiteres Beispiel einer Testbremsung 9 ist eine in Fig. 2b illustrierte Anforderungsbremsung 15 des Fahrzeugs 300. Fig. 2c illustriert hingegen eine positive Testbeschleunigung 11 des Fahrzeugs 300, bei der eine Geschwindigkeit 350 des Fahrzeugs zunimmt. Zum Durchführen der Testbeschleunigung 5 wirkt ein Fahrzeugaktuator 314 auf ein Prüfrad 352 des Fahrzeugs 300 ein. Im Falle einer Testbremsung 9 ist der Fahrzeugaktuator 314 ein Bremsaktuator 322 des Fahrzeugs 300. Das Prüfrad 352 ist im betrachteten Ausführungsbeispiel ein linkes Hinterrad 310a des Fahrzeugs 300. Die Auswahl eines Hinterrads 310 als Prüfrad 352 ist dahingehend vorteilhaft, dass das Fahrzeug 300 ein Nutzfahrzeug 354 ist, dessen Hinterachse 304 eine Höchstlastachse 356 des Fahrzeugs 300 darstellt. Von den drei Achsen 302, 304, 306 des Fahrzeugs 300 weist die Hinterachse 304 eine maximale Achslast 358 auf. Durch das Einwirken auf das Prüfrad 352 hervorgerufenen Wirkungen sind so besonders groß und können zuverlässig ermittelt werden.

Für den Fall einer positiven Testbeschleunigung 11 ist der Fahrzeugaktuator 314 in dem gezeigten Ausführungsbeispiel ein Antriebsmotor 360 des Fahrzeugs 300, der ebenfalls auf das linke Hinterrad 310a einwirkt, das hier das Prüfrad 352 bildet. Im gezeigten Ausführungsbeispiel ist das linke Hinterrad 310a also sowohl für die Testbremsung 9 als auch für die positive Testbeschleunigung 11 das Prüfrad 352. Es kann aber auch vorgesehen sein, dass ein bei einer positiven Testbeschleunigung 11 betrachtetes Prüfrad 352 ein von einem bei einer Testbremsung 9 betrachteten Prüfrad 352 verschiedenes Rad 308, 310, 312 des Fahrzeugs 300 ist. Zum Einwirken auf das Prüfrad 352 stellt der Antriebsmotor 360 als Stellgröße 324 ein Antriebsmoment 362 an dem Prüfrad 352 bereit. Es soll jedoch verstanden werden, dass das Antriebsmoment 362 neben dem Prüfrad 352 auch an weiteren Rädern bereitgestellt werden kann, insbesondere wenn diese Räder über ein Differential mit dem Prüfrad 352 verbunden sind. Eine mit dem Fahrzeugnetzwerk 334 verbundene Motorsteuereinheit 364 steuert den Antriebsmotor 360 an und stellt korrespondierende Motorsteuersignale 366 auf dem Fahrzeugnetzwerk 334 bereit. Das Fahrerassistenzsystem empfängt diese Steuersignale 366. Anstelle des Antriebsmoments 362 kann aber beispielsweise auch eine am Motor 360 bereitgestellte Kraftstoffmenge die Stellgröße 324 sein.

Infolge des Einwirkens auf das Prüfrad 352 bildet sich während der Testbeschleunigung 5 an diesem Prüfrad 352 ein Radschlupf 17 aus. Der Radschlupf 17 ist eine Abweichung zwischen einem von dem Prüfrad 352 zurückgelegten Weg und einer Strecke, die relativ zur Fahrbahn 344 zurückgelegt wurde. Der Radschlupf 17 des Prüfrads 352 wird in einem zweiten Schritt des Verfahrens 1 ermittelt, wobei dieses Ermitteln 19 für zumindest einen Zeitabschnitt 20 der Testbeschleunigung erfolgt. Der Zeitabschnitt 20 hat im betrachteten Ausführungsbeispiel eine Dauer von 1,5 s.

Zum Ermitteln 19 des Radschlupfes 17 empfängt die Steuereinheit 202 des Fahrerassistenzsystems 200 über die Schnittstelle 204 Raddrehzahlsignale 368 von dem Fahrzeugnetzwerk 334. Die Raddrehzahlsignale 368 umfassen hier ein Prüfdrehzahlsignal 370, das eine Prüfdrehzahl 372 des Prüfrads 352 repräsentiert. Ferner umfassen die Raddrehzahlsignale 368 ein Vergleichsdrehzahlsignal 374. Das Vergleichsdrehzahlsignal 374 repräsentiert eine Vergleichsdrehzahl 376 eines Vergleichsrads 378. Das Vergleichsrad 378 ist ein linkes Zusatzrad 312a. Das an der Hinterachse 304 angeordnete Prüfrad 352 und das Vergleichsrad 378 sind im gezeigten Ausführungsbeispiel also an verschiedenen Achsen 304, 306 des Fahrzeugs 300 angeordnet. Das Vergleichsrad 378 könnte grundsätzlich auch ein Vorderrad 308 der Vorderachse 304 sein. Vorzugsweise ist das Vergleichsrad 378 aber ein Rad der Hinterachse 304 oder der Zusatzachse 306. Durch das Vorsehen des Vergleichsrad 378 an einer ungelenkten Achse 304, 306 können ungewollte Lenkwirkungen verhindert werden, die sich an gelenkten Achsen (bspw. der Vorderachse 302) in Folge asymmetrischer Eingriffe einstellen. Das Vergleichsrad 378 ist ein während des Zeitabschnitts 20 freirollendes Rad 308, 310, 312 des Fahrzeugs 300. Zumindest im betrachteten Zeitabschnitt 20 der Testbeschleunigung 5 wird also vorzugsweise nicht von einer Einheit des Fahrzeugs 300, insbesondere nicht von einem Fahrzeugaktuator 314 auf das Vergleichsrad 378 eingewirkt, um dessen Umfangsgeschwindigkeit zu ändern. Es wird kein Brems- oder Beschleunigungsmoment an dem Vergleichsrad 378 bereitgestellt. Es ist aber grundsätzlich denkbar, dass das Vergleichsrad 378 während der Testbeschleunigung 5 gelenkt wird, wenn das Vergleichsrad 378 ein Rad einer gelenkten Achse ist. Vorzugsweise wird die Testbeschleunigung 5 aber während einer Geradeausfahrt des Fahrzeugs 5 durchgeführt, während das Fahrzeug 300 nicht gelenkt sind. An einer Lenkung 381 wird demnach während der Testbeschleunigung 5 vorzugsweise keine Stellgröße 324 bereitgestellt.

Unter Verwendung der Prüfdrehzahlsignale 368 ermittelt die Steuereinheit 202 des Fahrerassistenzsystems 200 bei einem Ermitteln 21 die Prüfdrehzahl 372. Das Ermitteln 21 wird hier also basierend auf Fahrzeugsignalen des Fahrzeugs 300 durchgeführt. Es kann aber auch vorgesehen sein, dass das Fahrerassistenzsystem 200 das Ermitteln 21 der Prüfdrehzahl 372 unter Verwendung eines oder mehrerer Drehzahlsensoren des Fahrerassistenzsystems 200 durchführt. Ein Ermitteln 23 der Vergleichsdrehzahl 376 des Vergleichsrads 378 erfolgt durch die Steuereinheit 202 unter Verwendung der Vergleichsdrehzahlsignale 374. Analog zum Ermitteln 21 der Prüfdrehzahl 372 kann aber auch das Ermitteln 23 der Vergleichsdrehzahl 376 unmittelbar unter Verwendung zumindest eines Drehzahlsensors des Fahrerassistenzsystems 200 durchgeführt werden. Der hier beschriebene signalbasierte Ansatz ist vorteilhaft, da Raddrehzahlsignale 368, die Drehzahlen von Rädern 308, 310, 312 des Fahrzeugs 300 repräsentieren, bei modernen Fahrzeugen 200 meist bereits zu anderen Zwecken auf dem Fahrzeugnetzwerk 334 bereitgestellt werden. So ermittelt beispielsweise eine Stabilitätsregelsystem 380, wie beispielsweise eine Electronic Stability Control (ESC), bei vielen modernen Fahrzeugen 300 Drehzahlen bzw. korrespondierende Raddrehzahlsignale 367 und stellt diese auf dem Fahrzeugnetzwerk 334 bereit. Vorzugsweise kann die Vergleichsdrehzahl 376 auch GPS-basiert ermittelt werden. In diesem Fall kann auf ein freirollendes Vergleichsrad 378 verzichtet werden und alle Räder 308, 310, 312 des Fahrzeugs 300 können beim Ermitteln 23 der Vergleichsdrehzahl 376 gebremst sein. So kann beispielsweise aus einer Geschwindigkeit des Fahrzeugs 300, die aus GPS-Daten ermittelt wird, und einem Radumfang auf eine Vergleichsdrehzahl 376 geschlossen werden.

Anschließend an das simultane Ermitteln 21 der Prüfdrehzahl 372 und das Ermitteln 23 der Vergleichsdrehzahl 376, wird der Radschlupf 17 basierend auf der Prüfdrehzahl 372 und der Vergleichsdrehzahl 376 ermittelt (Ermitteln 19 in Fig. 3). Im beschriebenen Ausführungsbeispiel ist dies besonders einfach möglich, da das Vergleichsrad 378 frei rollt.

Hierdurch ist eine Relativgeschwindigkeit zwischen dem Vergleichsrad 378 und der Fahrbahn 344 vernachlässigbar gering, sodass der Radschlupf 17 ein Betrag einer Differenz zwischen der Vergleichsdrehzahl 376 und der Prüfdrehzahl 372 ist.

Simultan zum Ermitteln 19 des Radschlupfes 17 erfolgt im Verfahren 1 ein Ermitteln 27 einer in dem Zeitabschnitt 20 der Testbremsung 5 zum Einwirken auf das Prüfrad 352 bereitgestellten Prüfstellgröße 382. Für eine Testbremsung 9 ist die Prüfstellgröße 382 (analog zur Stellgröße 324) der Bremsdruck pB, der an dem Bremsaktuator 332c des Prüfrads 352 bzw. des linken Hinterrads 310a bereitgestellt wird, um an dem Prüfrad 352 ein Bremsmoment 313 bereitzustellen und so auf das Prüfrad 352 einzuwirken. In analoger Weise ist die Prüfstellgröße 382 für die positive Testbeschleunigung 11 das von dem Antriebsmotor 360 an dem Prüfrad 352 bereitgestellte Antriebsmoment 362. Die Bremssignale 328 und die Motorsteuersignale 366 werden auf dem Fahrzeugnetzwerk 334 bereitgestellt, sodass die Steuereinheit 202 des Fahrerassistenzsystems 200 die zur Testbeschleunigung 5 gehörende Prüfstellgröße 382 ermitteln kann.

Ferner erfolgt im Verfahren 1 ein Ermitteln 29 einer in dem Zeitabschnitt 20 an dem Prüfrad 352 vorliegenden Prüflastcharakteristik 384, die im vorliegenden Ausführungsbeispiel eine Achslast 386 an der Achse 304 des Fahrzeugs 300 ist, der das Prüfrad 352 zugeordnet ist. Die Prüflastcharakteristik 384 ist hier also eine Achslast 386 der Hinterachse 304 des Fahrzeugs 300. Die Achslast 386 wird von einem in den Figuren nicht dargestellten Luftfedersystem des Fahrzeugs 300 ermittelt, wobei das Luftfedersystem die Achslast 386 repräsentierende Achslastsignale 388 auf dem Fahrzeugnetzwerk 334 bereitstellt. Die Steuereinheit 202 führt das Ermitteln 29 der Prüflastcharakteristik 384 unter Verwendung dieser Achslastsignale 388 aus. Auch für das Ermitteln 29 können so vorteilhaft bereits auf dem Fahrzeugnetzwerk 334 vorhandene Signale genutzt werden. Das Verfahren 1 kann so besonders einfach implementiert werden.

Basierend auf der ermittelten Prüflastcharakteristik 384, dem ermittelten Radschlupf 17 und der ermittelten Prüfstellgröße 382 erfolgt anschließend ein Ermitteln 31 eines Referenzreibwerts 33. Die Prüflastcharakteristik 384, der Radschlupf 17 und die Prüfstellgröße 382 charakterisieren den Referenzreibwert 33 müssen aber nicht unmittelbar zum Ermitteln 31 verwendet werden. Vielmehr können beim Ermitteln 31 auch zunächst Zwischengrößen aus der Prüflastcharakteristik 384, dem Radschlupf 17 und/oder der Prüfstellgröße 382 bestimmt werden. So kann beispielswiese mittels geeigneter Korrelationen aus der Prüfstellgröße 382 ein korrespondierendes Antriebsmoment 362 oder Bremsmoment 313 der Testbeschleunigung 5 ermittelt werden.

Ferner wird der Referenzreibwert 33 im gezeigten Ausführungsbeispiel unter Verwendung von Umweltdaten 35 ermittelt, die von Umweltsensoren 390 des Fahrzeugs 300 auf dem Fahrzeugnetzwerk 334 bereitgestellt werden. So stellt beispielsweise ein Scheibenwischer 394 des Fahrzeugs 300 Scheibenwischersignale 396 auf dem Fahrzeugnetzwerk 334 bereit, die genutzt werden können, um auf eine Fahrbahnnässe der Fahrbahn 344 zu schließen. Schließlich umfasst das Fahrzeug 300 im gezeigten Ausführungsbeispiel als weiteren Umweltsensor 390 einen Umgebungstemperatursensor 398, dessen Temperatursignal 400 von der Steuereinheit 202 des Fahrerassistenzsystems 200 nutzbar ist, um eine Umgebungstemperatur zu ermitteln und Rückschlüsse auf die Haftung zwischen Fahrzeug 300 und Fahrbahn 344 zu ziehen. Ein vorstehend beispielhaft anhand des Ermittelns der Temperatursignale 400 und der Scheibenwischersignale 396 beschriebenes Ermitteln 37 von Umweltdaten 35 ist in Fig. 3 ebenfalls illustriert. Die Umweltdaten 35 können aber beispielsweise auch eine geographische Lage und/oder ein Datum umfassen. So herrscht beispielsweise in nördlichen Breiten und in Wintermonaten mit hoher Wahrscheinlichkeit Straßenglätte, sodass eine geographische Lage des Fahrzeugs 300 Rückschlüsse auf den Reibwert 7 ermöglicht.

Der Referenzreibwert 33 ist hier ein im Rahmen einer Testbeschleunigung 5 ermittelter Reibwert. Gegenüber einer regulären Beschleunigung des Fahrzeugs 300 weist die Testbeschleunigung 5 Besonderheiten auf, die anhand der in Fig. 2a dargestellten Normalbremsung 13, der in Fig. 2b illustrierten Anforderungsbremsung 15 und der in Fig. 2c dargestellten positiven Testbeschleunigung 11 erläutert werden.

Die als Normalbremsung 13 ausgeführte Testbremsung 9 (Fig. 2a) ist dazu vorgesehen, eine Fahraufgabe des Fahrzeugs 300 zu erfüllen. Im gezeigten Ausführungsbeispiel wird das Fahrzeug 300 durch die Normalbremsung 13 vor der roten Ampel 338 zum Stehen gebracht. Die Normalbremsung 13 wird also durchgeführt, weil ein realer Verzögerungsbedarf für das Fahrzeug 300 besteht, der nicht allein durch das Ermitteln 31 des Referenzreibwerts 33 begründet ist. Zum Bremsen des Fahrzeugs 300 während der als Normalbremsung 13 ausgeführten Testbremsung 9 wird hier an allen Rädern 308, 310, 312 mit Ausnahme des Vergleichsrads 378 bzw. des linken Zusatzrads 312a ein Bremsmoment 313 ausgesteuert. Es wird hier demnach an allen Bremsaktuatoren 322 außer dem Bremsaktuator 322e des Vergleichsrads 378 ein Bremsdruck pB bereitgestellt. Durch das Bremsen aller Räder 308, 310, 312 des Fahrzeugs 300 mit Ausnahme des Vergleichsrads 378 kann eine zum Erfüllen der vorliegenden Fahraufgabe ausreichende Verzögerung des Fahrzeugs 300 bereitgestellt werden. Das Fahrzeug 300 wird so sicher vor der Ampel 338 zum Stehen gebracht. Ferner ist vorteilhaft, das eine während des Fahrbetriebs des Fahrzeugs 300 vorkommende Normalbremsung 13 zum Ermitteln 31 des Referenzreibwerts 33 genutzt werden kann. Die Normalbremsung 13 vor der Ampel 338 ist eine moderate Bremsung von etwa 1 m/s², sodass aus dem Ausnehmen des Vergleichsrads 378 von der Testbremsung 9 kein erhöhtes Unfallrisiko resultiert. Vorzugsweise wird im Rahmen der moderaten Bremsung eine Bremskraftverteilung des Fahrzeugs 300 angepasst bzw. eine Bremskraftumverteilung vorgenommen. So kann das Prüfrad 352 einen besonders großen Anteil an der Verzögerung bereitstellen, sodass sich daran ein hoher Bremsschlupf einstellt. Der erhöhte Bremsschlupf erleichtert das Ermitteln 19 des Radschlupfs und kann eine Genauigkeit beim Ermitteln 39 des gegenwärtigen Reibwerts 7 verbessern. Der erhöhte Verzögerungsanteil des Prüfrads 352 kann durch Reduzieren der Bremsleistung weiterer Bremsaktuatoren 322 (bzw. durch Umverteilung der Bremskraft von den weiteren Rädern auf das Prüfrad 352) kompensiert werden. Ferner ist der Zeitabschnitt 20 mit einem Wert von 1,5 s vergleichsweise kurz, wobei vor und nach dem Zeitabschnitt 20 ausnahmslos alle Räder 308, 310, 312 des Fahrzeugs 300 zum Bremsen genutzt werden können.

Im Gegensatz zu Fig. 2a illustriert Fig. 2b keine Normalbremsung 13, sondern eine Anforderungsbremsung 15. Die Anforderungsbremsung 15 wird nur zum Zwecke des Ermittelns 31 des Referenzreibwerts 33 initiiert und ist nicht zum Erfüllen einer Fahraufgabe des Fahrzeugs 300 vorgesehen. So fährt das Fahrzeug 300 im illustrierten Ausführungsbeispiel mit moderater Geschwindigkeit auf einer geraden Fahrbahn 344, wobei kein Hindernis vor dem Fahrzeug 300 liegt. In einer solchen Situation ist eine Anforderungsbremsung 15 unkritisch möglich. Bei der Anforderungsbremsung 15 soll die Geschwindigkeit 350 des Fahrzeugs 300 im Wesentlichen konstant gehalten werden. Es wird daher im beschriebenen Ausführungsbeispiel der Anforderungsbremsung 15 nur das Prüfrad 352 gebremst. Im Zeitabschnitt 20 wird nur an dem Bremsaktuator 322c des Prüfrads 352 bzw. des linken Hinterrads 310a ein Bremsdruck pB bereitgestellt, während alle übrigen Bremsaktuatoren 322 des Fahrzeugs 300 entlüftet sind. Während der Anforderungsbremsung 15 wird nur an dem Prüfrad 352 ein Bremsmoment 313 ausgesteuert. Neben dem Vergleichsrad 378 sind auch die Vorderräder 308, ein rechtes Hinterrad 310b und ein rechtes Zusatzrad 312b freirollend. Ein Einfluss der Anforderungsbremsung 15 auf eine Fahrdynamik des Fahrzeugs 300 ist gering. Vorzugsweise ist das Vergleichsrad 378 für die Anforderungsbremsung 15 ein Rad 308, 310, 312 einer nicht angetriebenen Achse 302, 304, 306 des Fahrzeugs 300, besonders bevorzugt ein Zusatzrad 312 der Zusatzachse 306. So überträgt bei vielen Fahrzeugen 300, insbesondere bei Nutzfahrzeugen, ein Differential Kräfte bzw. Momente zwischen den durch das Differenzial verbundenen angetriebenen Hinterrädern 310, wodurch das Ergebnis des Ermittelns 31 verfälscht werden kann. Insbesondere bei kleinen Bremsdrücken pB am Bremsaktuator 322c des Prüfrads 352 und einem kurzen Zeitabschnitt 20 kann die Anforderungsbremsung 15 auch von einem menschlichen Fahrer des Fahrzeugs 300 unbemerkt durchgeführt werden, da keine oder nur eine geringe Längsverzögerung des Fahrzeugs 300 aufgebaut wird. Der vernachlässigbare Einfluss der Anforderungsbremsung 15 auf die Fahrt des Fahrzeugs 300 soll in Fig. 2b dadurch verdeutlicht werden, dass das Fahrzeug 300 nach der Anforderungsbremsung 15 mit im Wesentlichen derselben Geschwindigkeit 350 (illustriert durch die Länge des sich in Fahrtrichtung 307 vor dem Fahrzeug 300 erstreckenden Pfeils) fährt wie vor der Anforderungsbremsung 15.

Fig. 2c zeigt eine positive Testbeschleunigung 11 des Fahrzeugs 300, bei der die Geschwindigkeit 350 des Fahrzeugs 300 entlang des Pfads 335 in Fahrtrichtung 307 zunimmt. Bei der positiven Testbeschleunigung 11 ist das Prüfrad 352 ebenfalls das linke Hinterrad 310a und das Vergleichsrad 378 ist das linke Zusatzrad 312a. Zum Durchführen 3 der positiven Testbeschleunigung 11 wirkt der Antriebsmotor 360 auf das Prüfrad 352 ein, indem dieser an dem Prüfrad 352 ein Antriebsmoment 362 bereitstellt. Im Unterschied zur Anforderungsbremsung 15 wird bei der positiven Testbeschleunigung 11 hier aber neben dem Prüfrad 352 auch auf ein rechtes Hinterrad 310b eingewirkt. Alle übrigen Räder 308, 312 des Fahrzeugs 300, also auch das das Vergleichsrad 378 bildende linke Zusatzrad 312a, sind hingegen freirollend. Da das Vergleichsrad 378 und das Prüfrad 352 an verschiedenen Achsen 302, 304, 306 des Fahrzeugs 300 angeordnet sind, kann vorteilhaft an allen Rädern 310 der angetriebenen Hinterachse 304 ein Antriebsmoment 362 bereitgestellt werden. Ein Referenzreibwert 33 wird bei einer gleichmäßigen bzw. symmetrischen positiven Beschleunigung des Fahrzeugs 300 ermittelt. So ist eine Normalbeschleunigung 402 des Fahrzeugs 300 zum Ermitteln 31 des Referenzreibwerts 33 nutzbar. Die Normalbeschleunigung 402 dient zum Erfüllen einer Fahraufgabe des Fahrzeugs 300 und ist in Fig. 2c dadurch illustriert, dass das Fahrzeug 300 von der Ampel 338, die in Fig. 2c ein grünes Signal zeigt, losfährt.

Es soll verstanden werden, dass während eines Betriebs des Fahrzeugs 300 vorzugsweise sowohl positive Testbeschleunigungen 11 als auch Normalbremsungen 13 und Anforderungsbremsungen 15 zum Ermitteln 31 des Referenzreibwerts 33 genutzt werden können. So wird in den gezeigten Ausführungsbeispielen all dieser Testbeschleunigungen 5 der Radschlupf 17 aus der Prüfdrehzahl 372 des Prüfrads 352 und der Vergleichsdrehzahl 376 des Vergleichsrads 378 ermittelt und zusammen mit jeweils ermittelten Prüflastcharakteristika 384 und jeweils ermittelten Prüfstellgrößen 382 zum Ermitteln 31 korrespondierender Referenzreibwerte 33 verwendet. Hierdurch kann über eine Lebensdauer des Fahrzeugs 300 eine zunehmend größer werdende Reibwert-Datenbasis geschaffen werden, die für eine Vielzahl von Fahrsituationen und Beladungen des Fahrzeugs 300 einen korrespondierenden Referenzreibwert 33 aufweist.

Die bei einer oder mehreren Testbeschleunigungen 5 ermittelten Referenzreibwerte 33 können dann genutzt werden, um während eines Betriebs des Fahrzeugs 300 vereinfacht einen gegenwärtigen Reibwert 7 zu ermitteln (Ermitteln 39 in Fig. 3). Der gegenwärtige Reibwert 7 ist der in einer betrachteten Betriebsfahrsituation 404 zwischen den Rädern 308, 310, 312 des Fahrzeugs 300 und der Fahrbahn 344 vorliegende Reibwert 7, der sich beim Betrieb des Fahrzeugs 300 schnell ändern kann. So kann sich beispielsweise ein Straßenbelag der befahrenen Fahrbahn 344 plötzlich ändern oder der gegenwärtige Reibwert 7 kann infolge von auf der Fahrbahn 344 befindlichem nassem Laub reduziert sein. Es ist daher während des Betriebs des Fahrzeugs 300 vorteilhaft, den gegenwärtigen Reibwert 7 engmaschig zu überwachen bzw. innerhalb kurzer Zeitabstände zu ermitteln. Dies ist insbesondere dann wünschenswert, wenn eine Änderung des Bewegungszustands des Fahrzeugs 300 geplant ist, also insbesondere dann, wenn das Fahrzeug 300 gelenkt, gebremst oder positiv beschleunigt werden soll. Dem Ermitteln 39 des gegenwärtigen Reibwerts 7 ist im gezeigten Ausführungsbeispiel des Verfahrens 1 ein Ermitteln 41 eines Betriebsradschlupfes 43 des Prüfrads 352 in einer Betriebsfahrsituation 404 vorgelagert. Der Betriebsradschlupf 43 kann beispielsweise unter Verwendung von Signalen erfolgen, die von dem Stabilitätsregelsystem 380 auf dem Fahrzeugnetzwerk 334 bereitgestellt und von der Steuereinheit 202 des Fahrerassistenzsystems 200 ausgewertet werden. Das Ermitteln 41 des Betriebsradschlupfes 43 kann aber von dem Fahrerassistenzsystem auch unmittelbar sensorbasiert durchgeführt werden. Ferner ermittelt die Steuereinheit 202 des Fahrerassistenzsystems 200 bei einem zum Ermitteln 41 des Betriebsradschlupfes 43 simultan durchgeführten Ermitteln 45 eine gegenwärtige Lastcharakteristik 406, die zur Prüflastcharakteristik 384 korrespondiert. Die gegenwärtige Lastcharakteristik 406 in der Betriebsfahrsituation 404, für die der gegenwärtige Reibwert 7 ermittelt wird, ist hier also ebenfalls eine Achslast 386 auf der Hinterachse 304. Zum Einwirken auf das Prüfrad 352 wird in der Betriebsfahrsituation 404 eine Stellgröße 408 an oder von einem dem Prüfrad 352 zugeordneten Fahrzeugaktuator 314 bereitgestellt. Die Stellgröße 408 korrespondiert zur Prüfstellgröße 382 und kann in einem in Fig. 3 als Ermitteln 47 illustrierten Schritt ermittelt werden. Wenn die Betriebsfahrsituation 404 eine Beschleunigung ist, dann ist die Stellgröße 408 hier ein Antriebsmoment 362 des Antriebsmotors 360. Im Falle einer Betriebsfahrsituation 404, die eine Bremsung des Fahrzeugs 300 ist, bildet ein am Bremsaktuator 322c des linken Hinterrads 310a bereitgestellter Bremsdruck pB die Stellgröße 408. Vorteilhaft am Ermitteln 41 des Betriebsradschlupfes 43 ist, dass vorzugsweise kein Rad 308, 310, 312 des Fahrzeugs 300 von der Bremsung 336 ausgenommen werden muss, sodass die volle Bremsleistung des Bremssystems 316 zum Verzögern des Fahrzeugs 300 zur Verfügung steht.

Nach dem Ermitteln 45 der gegenwärtigen Lastcharakteristik 406, dem Ermitteln 41 des Betriebsradschlupfes 43 und dem Ermitteln 47 der Stellgröße 408 erfolgt im Verfahren 1 gemäß Fig. 3 das Ermitteln 39 des gegenwärtigen Reibwerts 7. Dieses Ermitteln 39 ist im gezeigten Ausführungsbeispiel ein Auswählen 49 eines korrespondierenden Referenzreibwerts 33. Hierbei wird ein Referenzreibwert 33 als gegenwärtiger Reibwert 7 ausgewählt, dessen Lastcharakteristik 406 innerhalb einer Lasttoleranz 410 um die Prüflastcharakteristik 384 des Referenzreibwerts 33 liegt, dessen Betriebsradschlupf 43 innerhalb einer Schlupftoleranz 412 um den Radschlupf 17 liegt und dessen Stellgröße 408 innerhalb einer Stellgrößentoleranz 414 um die Prüfstellgröße 382 liegt. Vorzugsweise wird eine Toleranzweite der Lasttoleranz 410, der Schlupftoleranz 412 und/oder der Stellgrößentoleranz 414 in Abhängigkeit einer Anzahl verfügbarer Referenzreibwerte 33 angepasst. So können die Toleranzen 410, 412, 414 bei großer Datenbasis klein und bei kleiner Datenbasis groß sein.

Im Ausführungsbeispiel des Verfahrens 1 gemäß Fig. 3 wird der gegenwärtige Reibwert 7 im Anschluss an das Ermitteln 39 zum Durchführen 51 einer Folgeoperation 53 verwendet. Die Folgeoperation 53 ist hier ein Bereitstellen 55 eines Warnsignals 57 an einer Warnleuchte 416 des Fahrzeugs 300. Ferner wird ein elektrisches Warnsignal 59 von der Steuereinheit 202 des Fahrerassistenzsystems 200 auf dem Fahrzeugnetzwerk 334 bereitgestellt. Das elektrische Warnsignal 59 liegt so auch an der autonomen Einheit 332 vor und kann von dieser beim Ermitteln der Trajektorie 333 verwendet werden. Ferner kann mittels des elektrischen Warnsignals 59 das Stabilitätsregelsystem 380 in einen präventiven Anregelmodus 418 versetzt werden, indem das Stabilitätsregelsystem 380 etwaige Instabilitäten des Fahrzeugs 300 frühzeitig erkennen und ausgleichen kann. Ferner kann das Stabilitätsregelsystem 380 einen Bremsdruck für einen etwaigen Eingriff an den ermittelten Reibwert 7 anpassen. Im vorliegenden Ausführungsbeispiel wird das Stabilitätsregelsystem 380 jedoch nur in den präventiven Anregelmodus 418 versetzt, wenn der gegenwärtige Reibwert 7 einen Reibwertgrenzwert 61 unterschreitet. So sind stabilisierende Eingriffe des Stabilitätsregelsystem 380 meist nur dann nötig, wenn der gegenwärtige Reibwert 7 vergleichsweise gering ist, wie dies beispielsweise bei eisglatter Fahrbahn 344 der Fall ist.

### Bezugszeichen (Teil der Beschreibung)

- 1: Verfahren
- 3: Durchführen einer Testbeschleunigung
- 5: Testbeschleunigung
- 7: gegenwärtiger Reibwert
- 9: Testbremsung
- 11: positive Testbeschleunigung
- 13: Normalbremsung
- 15: Anforderungsbremsung
- 17: Radschlupf
- 19: Ermitteln eines Radschlupfes
- 20: Zeitabschnitt
- 21: Ermitteln einer Prüfdrehzahl
- 23: Ermitteln einer Vergleichsdrehzahl
- 27: Ermitteln einer Prüfstellgröße
- 29: Ermitteln einer Prüflastcharakteristik
- 31: Ermitteln eines Referenzreibwerts
- 33: Referenzreibwert
- 35: Umweltdaten
- 37: Ermitteln von Umweltdaten
- 39: Ermitteln eines gegenwärtigen Reibwerts
- 41: Ermitteln eines Betriebsradschlupfes
- 43: Betriebsradschlupf
- 45: Ermitteln einer gegenwärtigen Lastcharakteristik
- 47: Ermitteln einer Stellgröße
- 49: Auswählen eines korrespondierenden Referenzreibwerts
- 51: Durchführen einer Folgeoperation
- 53: Folgeoperation
- 55: Bereitstellen eines Warnsignals
- 57: Warnsignal
- 59: elektrisches Warnsignal
- 61: Reibwertgrenzwert
- 200: Fahrerassistenzsystem
- 202: Steuereinheit
- 204: Schnittstelle
- 300: Fahrzeug
- 302: Vorderachse
- 304: Hinterachse
- 306: liftbare Zusatzachse, Liftachse
- 307: Fahrtrichtung
- 308: Vorderräder
- 308a: linkes Vorderrad
- 310, 310a, 310b: Hinterrädern
- 312: Zusatzräder
- 313: Bremsmoment
- 314: Fahrzeugaktuatoren
- 316: Bremssystem
- 318: Bremssteuereinheit
- 320: Bremsmodulator
- 322, 322a, 322b, 322c, 322d: Bremsaktuatoren
- 324: Stellgröße
- 326: Bremssystem
- 328: Bremssignalen
- 330: Fußbremspedal
- 332: autonome Einheit
- 333: Trajektorie
- 334: Fahrzeugnetzwerk
- 335: Pfad
- 336: Bremsung
- 337: Geschwindigkeitsprofil
- 338: Ampel
- 344: Fahrbahn
- 346: Bremsweg
- 348: Stellgrößensignale
- 350: Geschwindigkeit des Fahrzeugs
- 352: Prüfrad
- 354: Nutzfahrzeug
- 356: Höchstlastachse
- 358: Achslast
- 360: Antriebsmotor
- 362: Antriebsmoment
- 364: Motorsteuereinheit
- 366: Motorsteuersignale
- 368: Raddrehzahlsignale
- 370: Prüfdrehzahlsignal
- 372: Prüfdrehzahl
- 374: Vergleichsdrehzahlsignal
- 376: Vergleichsdrehzahl
- 378: Vergleichsrad
- 380: Stabilitätsregelsystem
- 381: Lenkung
- 382: Prüfstellgröße
- 384: Prüflastcharakteristik
- 386: Achslast
- 388: Achslastsignale
- 390: Umweltsensoren
- 394: Scheibenwischer
- 396: Scheibenwischersignale
- 398: Umgebungstemperatursensor
- 400: Temperatursignal
- 402: Normalbeschleunigung
- 404: Betriebsfahrsituation
- 406: Lastcharakteristik
- 408: Stellgröße
- 410: Lasttoleranz
- 412: Schlupftoleranz
- 414: Stellgrößentoleranz
- 416: Warnleuchte
- 418: Anregelmodus
- pB: Bremsdruck

## Patentansprüche

1. Verfahren (1) zum Approximieren eines Reibwerts (7, 33) zwischen Rädern (308, 310, 312) eines Fahrzeugs (300) und einer Fahrbahn (344), wobei das Verfahren (1) die folgenden Schritte umfasst:
- Durchführen (3) zumindest einer Testbeschleunigung (5) des Fahrzeugs (300) durch Einwirken zumindest auf ein Prüfrad (352);
- Ermitteln (19) eines Radschlupfes (17) des Prüfrads (352) für zumindest einen Zeitabschnitt (20) der Testbeschleunigung (5);
- Ermitteln (27) einer in dem Zeitabschnitt (20) zum Einwirken auf das Prüfrad (352) bereitgestellten Prüfstellgröße (382),
- Ermitteln (29) einer in dem Zeitabschnitt (20) am Prüfrad (352) vorliegenden Prüflastcharakteristik (384); und
- Ermitteln (31) eines Referenzreibwerts (33) für die Testbeschleunigung (5) basierend auf der ermittelten Prüflastcharakteristik (384), der ermittelten Prüfstellgröße (382) und dem ermittelten Radschlupf (17) des Prüfrads (352), und das Ermitteln (19) eines Radschlupfes (17) des Prüfrads (352) für zumindest einen Zeitabschnitt (20) der Testbeschleunigung (5) umfasst:
- Ermitteln (21) einer Prüfdrehzahl (372) des Prüfrads (352);
- Ermitteln (23) einer Vergleichsdrehzahl (376) eines Vergleichsrads (378);
- Ermitteln des Radschlupfes (17) basierend auf der ermittelten Prüfdrehzahl (372) und der ermittelten Vergleichsdrehzahl (376), und
wobei die Testbeschleunigung (5) eine Testbremsung (9) des Fahrzeugs (300) ist, die Prüfstellgröße (382) ein Bremsdruck (pB) ist, der an einem dem Prüfrad (352) zugeordneten Bremsaktuator (322c) bereitgestellt wird,
**dadurch gekennzeichnet, dass**
das Vergleichsrad (378) ein im Zeitabschnitt (20) freirollendes Rad ist und
wobei die Vergleichsdrehzahl (376) basierend auf einer Fahrzeuggeschwindigkeit des Fahrzeugs (300) und einem Radumfang des Vergleichsrads (378) ermittelt wird, und
wobei das Vergleichsrad (378) von der Testbremsung (9) ausgenommen ist, sodass in dem Zeitabschnitt (20) kein Bremsdruck (pB) an einem dem Vergleichsrad (378) zugeordneten Bremsaktuator (322e) bereitgestellt wird, und
wobei die Testbremsung (9) eine Normalbremsung (13) ist, die in einem Normalfahrbetrieb des Fahrzeugs (300) zum Erfüllen einer Fahraufgabe durchgeführt wird.

2. Verfahren (1) nach Anspruch 1, wobei das Prüfrad (352) und das Vergleichsrad (378) voneinander verschiedenen Achsen (302, 304, 306) des Fahrzeugs (300) zugeordnet sind.

3. Verfahren (1) nach einem der Ansprüche 1 bis 2, wobei das Prüfrad (352) ein Rad (310a) einer Hinterachse (304) des Fahrzeugs (300), insbesondere einer Zusatzachse (306) des Fahrzeugs (300) ist.

4. Verfahren (1) nach einem der Ansprüche 1 bis 3, ferner aufweisend:
- Ermitteln (41) eins Betriebsradschlupfes (43) des Prüfrads (352) in einer Betriebsfahrsituation (404);
- Ermitteln (45) einer gegenwärtigen Lastcharakteristik (406) des Fahrzeugs (300) in der Betriebsfahrsituation (404);
- Ermitteln (47) einer in der Betriebsfahrsituation (404) zum Einwirken auf das Prüfrad (352) bereitgestellten Stellgröße (408);
- Ermitteln eines gegenwärtigen Reibwerts (7) der Betriebsfahrsituation (404) durch Auswählen (49) eines korrespondierenden Referenzreibwerts (33),
wobei der Referenzreibwert (33) zum gegenwärtigen Reibwert (7) korrespondiert, falls die ermittelte Lastcharakteristik (406) innerhalb einer Lasttoleranz (410) um die Prüflastcharakteristik (384) liegt, der Betriebsradschlupf (43) innerhalb einer Schlupftoleranz (412) um den Radschlupf (17) liegt und die Stellgröße (408) innerhalb einer Stellgrößentoleranz (414) um die Prüfstellgröße (382) liegt.

5. Verfahren (1) nach Anspruch 4, ferner aufweisend,
- Durchführen (51) einer Folgeoperation (53) unter Verwendung des gegenwärtigen Reibwerts (7),
wobei die Folgeoperation ein Bereitstellen (55) eines Warnsignals (57, 59), ein Versetzen eines Stabilitätsregelsystems (380) in einen präventiven Anregelmodus (418); ein Neuermitteln einer Trajektorie (333) des Fahrzeugs (300), ein Bereitstellen einer Geschwindigkeitsreduktionsaufforderung, ein Ermitteln eines Bewegungsfreiheitsgradgrenzwerts, ein Limitieren eines Bewegungsfreiheitsgrads des Fahrzeugs (300) und/oder ein Validieren eines Reibwertsensors ist oder umfasst,
wobei die Folgeoperation (53) vorzugsweise nur durchgeführt wird, wenn der gegenwärtige Reibwert (7) einen Reibwertgrenzwert unterschreitet.

6. Verfahren (1) nach Anspruch 1, wobei in dem Zeitabschnitt (20) ausschließlich das Vergleichsrad (378) von der Testbremsung (9) ausgenommen ist.

7. Verfahren (1) nach Anspruch 1 oder 6, ferner aufweisend eine Bremskraftumverteilung, bei der weitere gebremste Räder des Fahrzeugs (300) die fehlende Verzögerung des von der Testbremsung (9) ausgenommenen Vergleichsrads (378) kompensieren.

8. Verfahren (1) nach Anspruch 1, wobei in dem Zeitabschnitt (20) ausschließlich das zumindest eine Prüfrad (352) gebremst wird.

9. Verfahren (1) nach Anspruch 8, wobei die Testbremsung (9) ein zum Ermitteln des Referenzreibwerts (33) initiierte Anforderungsbremsung (15) ist, die ohne zugeordneten Verzögerungsbedarf des Fahrzeugs (300) initiiert wird, wobei die Anforderungsbremsung (15) vorzugsweise bei einer Geradeausfahrt des Fahrzeugs (300) initiiert wird.

10. Verfahren (1) nach einem der Ansprüche 1 bis 9, wobei die Testbremsung (9) eine moderate Bremsung in einem Bereich von größer 0 m/s² bis 2 m/s², insbesondere 1 m/s² bis 2 m/s², ist.

11. Verfahren (1) nach einem der Ansprüche 1 bis 10, wobei die Prüflastcharakteristik (384) eine Achslast (358) auf einer Prüfachse des Fahrzeugs (300), an der das Prüfrad (352) angeordnet ist, eine Radlast des Prüfrads (352), eine Massenverteilung des Fahrzeugs (300), eine Gesamtmasse des Fahrzeugs (300), eine Teilmasse eines Fahrzeugteils, an dem das Prüfrad (352) angeordnet ist, eine Schwerpunktlage des Fahrzeugs (300) und/oder eine Schwerpunktlage eines Fahrzeugteils ist oder umfasst.

12. Fahrerassistenzsystem (200), umfassend eine Steuereinheit (202) und eine Schnittstelle (204), wobei das Fahrerassistenzsystem (200) dazu ausgebildet ist, das Verfahren (1) gemäß einem der vorstehenden Ansprüche 1 bis 11 auszuführen.

13. Fahrzeug (300) mit zumindest zwei Achsen (302, 304, 306), einem Bremssystem (316), einer Lenkung (381), einem Antriebsmotor (360) und einem Fahrerassistenzsystem (200) nach Anspruch 12.

14. Computerprogrammprodukt mit Programmcode-Mitteln, die auf einem computerlesbaren Datenträger gespeichert sind, um das Verfahren (1) nach einem der Ansprüche 1 bis 11 auszuführen, wenn das Computerprogrammprodukt auf einer Recheneinheit (202) ausgeführt wird.

## Claims

1. Method (1) for approximating a coefficient of friction (7, 33) between wheels (308, 310, 312) of a vehicle (300) and a road surface (344), wherein the method (1) comprises the following steps:
- carrying out (3) at least one test acceleration (5) of the vehicle (300) by influencing at least one test wheel (352);
- determining (19) a wheel slip (17) of the test wheel (352) for at least one time period (20) of the test acceleration (5);
- determining (27) a test manipulated variable (382) provided during the time period (20) in order to act on the test wheel (352),
- determining (29) a test load characteristic (384) present at the test wheel (352) during the time period (20); and
- determining (31) a reference coefficient of friction (33) for the test acceleration (5) on the basis of the determined test load characteristic (384), the determined test manipulated variable (382) and the determined wheel slip (17) of the test wheel (352), and the determining (19) of a wheel slip (17) of the test wheel (352) for at least one time period (20) of the test acceleration (5) comprises:
- determining (21) a test rotational speed (372) of the test wheel (352);
- determining (23) a reference rotational speed (376) of a reference wheel (378);
- determining the wheel slip (17) on the basis of the determined test rotational speed (372) and the determined reference rotational speed (376), and
wherein the test acceleration (5) is a test braking (9) of the vehicle (300), the test manipulated variable (382) is a brake pressure (pB) which is provided at a brake actuator (322c) associated with the test wheel (352),
**characterized in that**
the reference wheel (378) is a wheel which rolls freely during the time period (20) and
wherein the reference rotational speed (376) is determined on the basis of a vehicle speed of the vehicle (300) and a wheel circumference of the reference wheel (378), and
wherein the reference wheel (378) is excluded from the test braking (9), so that during the time period (20) no brake pressure (pB) is provided at a brake actuator (322e) assigned to the reference wheel (378), and
wherein the test braking (9) is a normal braking (13) which is carried out in a normal driving operation of the vehicle (300) in order to fulfill a driving task.

2. Method (1) according to claim 1, wherein the test wheel (352) and the reference wheel (378) are assigned to different axles (302, 304, 306) of the vehicle (300).

3. Method (1) according to any of claims 1 to 2, wherein the test wheel (352) is a wheel (310a) of a rear axle (304) of the vehicle (300), in particular an additional axle (306) of the vehicle (300).

4. Method (1) according to any of claims 1 to 3, further comprising:
- determining (41) an operating wheel slip (43) of the test wheel (352) in an operating driving situation (404);
- determining (45) a current load characteristic (406) of the vehicle (300) in the operating driving situation (404);
- determining (47) a manipulated variable (408) provided in the operating driving situation (404) to act on the test wheel (352);
- determining a current coefficient of friction (7) of the operating driving situation (404) by selecting (49) a corresponding reference coefficient of friction (33),
wherein the reference coefficient of friction (33) corresponds to the current coefficient of friction (7) if the determined load characteristic (406) is within a load tolerance (410) around the test load characteristic (384), the operating wheel slip (43) is within a slip tolerance (412) around the wheel slip (17), and the manipulated variable (408) is within a manipulated variable tolerance (414) around the test manipulated variable (382).

5. Method (1) according to claim 4, further comprising
- carrying out (51) a subsequent operation (53) using the current coefficient of friction (7),
wherein the subsequent operation is or comprises providing (55) a warning signal (57, 59), moving a stability control system (380) into a preventive control mode (418); redetermining a trajectory (333) of the vehicle (300), providing a speed reduction request, determining a degree of freedom of movement limit value, limiting a degree of freedom of movement of the vehicle (300) and/or validating a coefficient of friction sensor, wherein the subsequent operation (53) is preferably only carried out if the current coefficient of friction (7) falls short of a coefficient of friction limit value.

6. Method (1) according to claim 1, wherein during the time period (20) only the reference wheel (378) is excluded from the test braking (9).

7. Method (1) according to claim 1 or 6, further comprising a brake force redistribution in which further braked wheels of the vehicle (300) compensate for the lack of deceleration of the reference wheel (378) excluded from the test braking (9).

8. Method (1) according to claim 1, wherein during the time period (20) only the at least one test wheel (352) is braked.

9. Method (1) according to claim 8, wherein the test braking (9) is a demand braking (15) initiated to determine the reference coefficient of friction (33), which demand braking is initiated without an associated deceleration requirement of the vehicle (300), wherein the demand braking (15) is preferably initiated when the vehicle (300) is traveling straight.

10. Method (1) according to any of claims 1 to 9, wherein the test braking (9) is a moderate braking in a range greater than 0 m/s² to 2 m/s², in particular 1 m/s² up to 2 m/s².

11. Method (1) according to any of claims 1 to 10, wherein the test load characteristic (384) is or comprises an axle load (358) on a test axle of the vehicle (300) at which the test wheel (352) is arranged, a wheel load of the test wheel (352), a mass distribution of the vehicle (300), a total mass of the vehicle (300), a partial mass of a vehicle part at which the test wheel (352) is arranged, a center of gravity position of the vehicle (300) and/or a center of gravity position of a vehicle part.

12. Driver assistance system (200) comprising a control unit (202) and an interface (204), wherein the driver assistance system (200) is designed to execute the method (1) according to any of the preceding claims 1 to 11.

13. Vehicle (300) comprising at least two axles (302, 304, 306), a braking system (316), a steering system (381), a drive motor (360) and a driver assistance system (200) according to claim 12.

14. Computer program product comprising program code means stored on a computer-readable data carrier, which execute the method (1) according to any of claims 1 to 11 when the computer program product is executed on a computing unit (202).

## Revendications

1. Procédé (1) pour l'approche par approximation d'un coefficient de frottement (7, 33) entre des roues (308, 310, 312) d'un véhicule (300) et une chaussée (344), dans lequel le procédé (1) comprend les étapes suivantes :
- réalisation (3) d'au moins une accélération de test (5) du véhicule (300) en agissant au moins sur une roue d'essai (352) ;
- détermination (19) d'un patinage de roue (17) de la roue d'essai (352) pendant au moins un intervalle de temps (20) de l'accélération de test (5) ;
- détermination (27) d'une grandeur de réglage d'essai (382) fournie pendant l'intervalle de temps (20) pour agir sur la roue d'essai (352),
- détermination (29) d'une caractéristique de charge d'essai (384) présente sur la roue d'essai (352) pendant l'intervalle de temps (20) ; et
- détermination (31) d'un coefficient de frottement de référence (33) pour l'accélération de test (5) sur la base de la caractéristique de charge d'essai (384) déterminée, de la grandeur de réglage d'essai (382) déterminée et du patinage de roue (17) déterminé de la roue d'essai (352), et la détermination (19) d'un patinage de roue (17) de la roue d'essai (352) pendant au moins un intervalle de temps (20) de l'accélération de test (5) comprend :
- la détermination (21) d'une vitesse de rotation d'essai (372) de la roue d'essai (352) ;
- la détermination (23) d'une vitesse de rotation de comparaison (376) d'une roue de comparaison (378) ;
- la détermination du patinage de roue (17) sur la base de la vitesse de rotation d'essai (372) déterminée et de la vitesse de rotation de référence (376) déterminée, et
dans lequel l'accélération de test (5) est un freinage de test (9) du véhicule (300), la grandeur de réglage d'essai (382) est une pression de freinage (pB) fournie à un actionneur de frein (322c) associé à la roue d'essai (352),
**caractérisé en ce que**
la roue de comparaison (378) est une roue tournant librement pendant l'intervalle de temps (20) et
dans lequel la vitesse de rotation de comparaison (376) est déterminée sur la base d'une vitesse de véhicule du véhicule (300) et d'une circonférence de roue de la roue de comparaison (378), et
dans lequel la roue de comparaison (378) est exclue du freinage de test (9), de sorte que, pendant l'intervalle de temps (20), aucune pression de freinage (pB) n'est fournie à un actionneur de frein (322e) associé à la roue de comparaison (378), et
dans lequel le freinage de test (9) est un freinage normal (13) qui est réalisé dans un mode de conduite normal du véhicule (300) afin de remplir une tâche de conduite.

2. Procédé (1) selon la revendication 1, dans lequel la roue d'essai (352) et la roue de comparaison (378) sont associées à des essieux (302, 304, 306) du véhicule (300) qui sont différents les uns des autres.

3. Procédé (1) selon l'une des revendications 1 à 2, dans lequel la roue d'essai (352) est une roue (310a) d'un essieu arrière (304) du véhicule (300), en particulier d'un essieu supplémentaire (306) du véhicule (300).

4. Procédé (1) selon l'une des revendications 1 à 3, présentant en outre :
- la détermination (41) d'un patinage de roue de service (43) de la roue d'essai (352) dans une situation de conduite de service (404) ;
- la détermination (45) d'une caractéristique de charge actuelle (406) du véhicule (300) dans la situation de conduite de service (404) ;
- la détermination (47) d'une grandeur de réglage (408) fournie dans la situation de conduite de service (404) pour agir sur la roue d'essai (352) ;
- la détermination d'un coefficient de frottement actuel (7) de la situation de conduite de service (404) par la sélection (49) d'un coefficient de frottement de référence (33) correspondant,
dans lequel le coefficient de frottement de référence (33) correspond au coefficient de frottement actuel (7) si la caractéristique de charge (406) déterminée se situe, dans une tolérance de charge (410), autour de la caractéristique de charge d'essai (384), que le patinage de roue de service (43) se situe, dans une tolérance de patinage (412), autour du patinage de roue (17), et que la grandeur de réglage (408) se situe, dans une tolérance de grandeur de réglage (414), autour de la grandeur de réglage d'essai (382).

5. Procédé (1) selon la revendication 4, présentant en outre
- la réalisation (51) d'une opération subséquente (53) à l'aide du coefficient de frottement actuel (7),
dans lequel l'opération subséquente est ou comprend la fourniture (55) d'un signal d'avertissement (57, 59), le passage d'un système de régulation de stabilité (380) dans un mode de régulation préventif (418) ; la détermination de nouveau d'une trajectoire (333) du véhicule (300), la fourniture d'une demande de réduction de vitesse, la détermination d'une valeur limite de degré de liberté de mouvement, la limitation d'un degré de liberté de mouvement du véhicule (300) et/ou la validation d'un capteur de coefficient de frottement, dans lequel l'opération subséquente (53) n'est de préférence réalisée que lorsque le coefficient de frottement actuel (7) est inférieur à une valeur limite de coefficient de frottement.

6. Procédé (1) selon la revendication 1, dans lequel, pendant l'intervalle de temps (20), seule la roue de comparaison (378) est exclue du freinage de test (9).

7. Procédé (1) selon la revendication 1 ou 6, présentant en outre une redistribution de la force de freinage, lors de laquelle d'autres roues freinées du véhicule (300) compensent le manque de décélération de la roue de comparaison (378) exclue du freinage de test (9).

8. Procédé (1) selon la revendication 1, dans lequel, pendant l'intervalle de temps (20), seule l'au moins une roue d'essai (352) est freinée.

9. Procédé (1) selon la revendication 8, dans lequel le freinage de test (9) est un freinage demandé (15) déclenché pour déterminer le coefficient de frottement de référence (33), lequel freinage demandé est initié sans besoin de décélération associé du véhicule (300), dans lequel le freinage demandé (15) est de préférence déclenché lorsque le véhicule (300) roule en ligne droite.

10. Procédé (1) selon l'une des revendications 1 à 9, dans lequel le freinage de test (9) est un freinage modéré compris dans une plage allant de plus de 0 m/s² à 2 m/s², en particulier de 1 m/s² à 2 m/s².

11. Procédé (1) selon l'une des revendications 1 à 10, dans lequel la caractéristique de charge d'essai (384) est ou comprend une charge d'essieu (358) sur un essieu d'essai du véhicule (300) sur lequel est disposée la roue d'essai (352), une charge de roue de la roue d'essai (352), une répartition de la masse du véhicule (300), une masse totale du véhicule (300), une masse partielle d'une partie de véhicule sur laquelle est disposée la roue d'essai (352), une position de centre de gravité du véhicule (300) et/ou une position de centre de gravité d'une partie de véhicule.

12. Système d'aide à la conduite (200), comprenant une unité de commande (202) et une interface (204), dans lequel le système d'aide à la conduite (200) est configuré pour exécuter le procédé (1) selon l'une des revendications 1 à 11 précédentes.

13. Véhicule (300) comportant au moins deux essieux (302, 304, 306), un système de freinage (316), une direction (381), un moteur de propulsion (360) et un système d'aide à la conduite (200) selon la revendication 12.

14. Produit-programme d'ordinateur comportant des moyens formant codes de programme qui sont stockés sur un support de données lisible par ordinateur afin d'exécuter le procédé (1) selon l'une des revendications 1 à 11 lorsque le produit-programme d'ordinateur est exécuté sur une unité de calcul (202).
